# EUROPÄISCHE PATENTSCHRIFT

(11) **EP 2 859 766 B1**
(45) Veröffentlichungstag und Bekanntmachung des Hinweises auf die Patenterteilung: **09.05.2018**
(21) Anmeldenummer: 13712290.9
(22) Anmeldetag: 27.03.2013
(51) Int. Cl.: H04W 56/00

(54) **VERFAHREN UND SYSTEM ZUR ZEITSYNCHRONISIERUNG IN EINEM AD-HOC-NETZWERK**
METHOD AND SYSTEM FOR TIME SYNCHRONIZATION IN AN AD-HOC NETWORK
PROCÉDÉ ET SYSTÈME DE SYNCHRONISATION TEMPORELLE DANS UN RÉSEAU AD HOC

(30) Priorität: 08.06.2012 DE 102012209655; 21.01.2013 DE 102013200845
(43) Veröffentlichungstag der Anmeldung: 15.04.2015
(73) Patentinhaber: Rohde & Schwarz GmbH & Co. KG, 81671 München (DE)
(72) Erfinder: PFEIFER, Hagen, 81379 München (DE); GLÄSER, Gerhard, 40764 Langenfeld (DE)
(74) Vertreter: Körfer, Thomas
(86) Internationale Anmeldenummer: PCT/EP2013/056552
(87) Internationale Veröffentlichungsnummer: WO 2013/182332

(56) Entgegenhaltungen:
- WO-A1-2011/154911
- US-A1- 2003 117 991
- US-A1- 2005 058 084
- US-A1- 2005 169 233
- US-A1- 2010 157 975
- US-A1- 2010 238 890
- SICHITIU M L ET AL: "Simple, accurate time synchronization for wireless sensor networks", 2003 IEEE WIRELESS COMMUNICATIONS AND NETWORKING CONFERENCE RECORD : 16 - 20 MARCH 2003, NEW ORLEANS, LOUISIANA, USA, IEEE OPERATIONS CENTER, PISCATAWAY, NJ, Bd. 2, 16. März 2003 (2003-03-16), Seiten 1266-1273, XP010639949, DOI: 10.1109/WCNC.2003.1200555 ISBN: 978-0-7803-7700-4

## Beschreibung

Die Erfindung betrifft ein Verfahren und ein System zur Zeitsynchronisierung in einem ad-hoc-Netzwerk.

In mobilen Netzwerken ohne Infrastruktur - so genannten ad-hoc-Netzwerken - wird das Management, die Überwachung und die Kontrolle des Datenverkehrs direkt zwischen den einzelnen Netzteilnehmern - den so genannten Netzknoten bzw. Knoten - abgewickelt.

Eine wesentliche Funktion ist hierbei die Zeitsynchronisierung zwischen allen Knoten eines ad-hoc-Netzwerkes. Eine identische Zeitbasis bei allen Knoten des ad-hoc-Netzwerkes ist zwingende Voraussetzung für die zeitkorrekte Synchronisierung aller Knoten des ad-hoc-Netzwerkes auf die in einem bestimmten Zeitfenster übertragenen Synchronisierbitmuster zur Synchronisierung auf die korrekten Phase und Frequenz des Übertragungssignals z. B. in einem bestimmten Zeitabschnitt eines in einem ad-hoc-Netzwerk verwendeten Frequenzsprungverfahrens.

Die US 2005/0169233 A1 beschreibt ein Verfahren zur Zeitsynchronisierung von Netz-Knoten eines ad-hoc-Netzes. Die Zeitinformation zur Zeitsynchronisierung wird hierbei über Zeitstempel in einzelnen Datenpaketen übertragen.

Aus der WO 2011/154911 A1 ist eine Zeitsynchronisierung in einem ad-hoc-Netzwerk bekannt. Hierbei werden zuerst Cluster von jeweils regional benachbarten Knoten gebildet. Innerhalb jedes einzelnen gebildeten Clusters erfolgt eine Intra-Cluster-Zeitsynchronisierung, indem in einer festgelegten Reihenfolge einzelne Knoten des Clusters eine Nachricht zur Zeitsynchronisierung mit dem Sendezeitpunkt der Nachricht in der lokalen Zeit des sendenden Knotens versenden, mit dem die übrigen Knoten des Clusters ihre lokale Zeit an die lokale Zeit des sendenden Knotens synchronisieren. Nachteilig an der Zeitsynchronisierung der WO 2011/154911 A1 ist einerseits der Zeitverzug in der Durchführung der Zeitsynchronisierung, der aus der für die Bildung des Clusters benötigten Zeit resultiert, und andererseits der Aufwand für die Durchführung der Zeitsynchronisierung, der eine Festlegung der Reihenfolge für die Versendung von Nachrichten zur Zeitsynchronisierung beinhaltet.

Aus der US 2003/0117991 A1 geht eine Zeitsynchronisierung von Netzknoten in einem Mobilfunknetz hervor, bei der vorab die Hierarchie festgelegt wird, die für jeden Netzknoten Referenz-Netzknoten bestimmt, an die der jeweilige Netzknoten seine Zeit synchronisieren kann. Nachteilig an diesem Synchronisierungsverfahren ist der Zeitverzug für die Bestimmung der Zeitreferenz-Hierarchie und für die Bekanntmachung dieser Hierarchie von Referenz-Netzknoten an jeden Netzknoten des ad-hoc-Netzwerkes.

Aus der US 2010/0238890 A1 ist eine Zeitsynchronisierung zwischen einzelnen Netzknoten eines ad-hoc-Netzwerkes bekannt, das nach dem Master-Slave-Prinzip funktioniert. Es wird ein Master-Netzknoten festgelegt, der die Zeitreferenz für insgesamt M Slave-Netzknoten zur Verfügung stellt. Nachteilig an diesem Synchronisierverfahren ist ebenfalls der Zeitverzug für die Festlegung des Master-Netzknotens und für die Bekanntmachung des Master-Netz-Knotens bei allen M Slave-Netzknoten des ad-hoc-Netzes.

Aus der US 2005/0058084 ist eine Methode und eine Vorrichtung zum Auffinden von benachbarten Netzknoten in einem Piconetz bekannt, wobei die benachbarten Knoten durch einen einzelnen Piconetz Controller, der auch für die Synchronisation zuständig ist, gesteuert werden. Aufgabe der Erfindung ist es deshalb, ein Verfahren und ein System zur Zeitsynchronisierung in einem ad-hoc-Netzwerk zu schaffen, das schnellstmöglich und aufwandsminimiert eine Zeitsynchronisierung mit allen Knoten des ad-hoc-Netzwerkes ermöglicht.

Die Aufgabe wird durch ein erfindungsgemäßes Verfahren zur Zeitsynchronisierung in einem mobilen ad-hoc-Netzwerk mit den Merkmalen des Patentanspruchs 1 und durch ein erfindungsgemäßes System zur Zeitsynchronisierung in einem mobilen ad-hoc-Netzwerk mit den Merkmalen des Patentanspruchs 17 gelöst. Vorteilhafte technische Weiterbildungen werden in den jeweils abhängigen Patentansprüchen aufgezeigt.

Hierzu sendet jeder Knoten eines ad-hoc-Netzes jeweils eine Nachricht zur Signalisierung einer Anwesenheit in jeweils einem bestimmten Zeitraster aus, die jeweils von Netzknoten, die sich in Empfangsreichweite des sendenden Knotens befinden, durch Versenden einer Quittierungs-Nachricht quittiert werden. Ausgehend von zwei Knoten, die jeweils in Übertragungsreichweite zueinander positioniert sind, wird aus den Nachrichten einer Quittierungs-Nachricht durch den die Quittierungs-Nachricht empfangenden Knoten derjenige Knoten festgelegt, an dessen lokale Zeit der jeweils andere Knoten seine lokale Zeit synchronisiert. Derjenige Knoten, dessen lokale Zeit zur Synchronisierung der lokalen Zeit des jeweils anderen Knoten dient, stellt somit in dem aus zwei Knoten sich bildenden ad-hoc-Netzwerk den lokale Zeit-Master des jeweils anderen Knotens dar.

Bei den beiden Knoten kann es sich um Knoten handeln, die jeweils noch nicht einem ad-hoc-Netzwerk angehören und somit über den Vorgang der Zeitsynchronisierung ein gemeinsames ad-hoc-Netzwerk gründen. Bei den beiden Knoten kann es sich auch um Knoten handeln, die jeweils beide einem unterschiedlichen ad-hoc-Netzwerk angehören. In diesem Fall werden die zu jeweils einem der beiden Knoten gehörigen ad-hoc-Netzwerke zusammengefügt und die zu den beiden ad-hoc-Netzwerken gehörigen Knoten synchronisieren jeweils ihre lokale Zeit an die lokale Zeit des festgelegten Knotens. Auch kann es sich bei den beiden Knoten jeweils um einen Knoten, der keinem ad-hoc-Netzwerk angehört, und um einen Knoten, der einem ad-hoc-Netzwerk angehört, handeln. In diesem Fall wird der Knoten ohne Einbindung in ein ad-hoc-Netzwerk in das ad-hoc-Netzwerk des jeweils anderen Knoten integriert und die einzelnen Knoten des ursprünglichen ad-hoc-Netzwerkes synchronisieren ihre lokale Zeit auf die lokale Zeit des festgelegten Knotens.

In allen drei Fällen wird mit höchster Priorität derjenige Knoten von den beiden sich in Übertragungsreichweite befindenden Knoten bevorzugt festgelegt, dessen lokale Zeit die jeweils höchste Zeitgenauigkeit aufweist oder der an einem ad-hoc-Netzwerk an einem Knoten angebunden ist, dessen lokale Zeit die jeweils höchste Zeitgenauigkeit aufweist. Auf diese Weise ist gewährleistet, dass alle Knoten des sich nun bildenden ad-hoc-Netzwerkes mit der höchstmöglichen Zeitgenauigkeit zueinander zeitsynchronisiert sind und somit eine bestmögliche Phasen- und Frequenzsynchronisierung aller Knoten des sich nun bildenden ad-hoc-Netzwerkes an die in einem Zeitabschnitt des Frequenzsprungverfahrens verwendete Phase bzw. Frequenz des im ad-hoc-Netzwerk verwendeten Übertragungssignals ermöglicht wird.

Wird ein einzig aus zwei Knoten bestehendes ad-hoc-Netzwerk gebildet, deren lokale Zeiten jeweils eine identische Zeitgenauigkeit aufweisen, so wird bevorzugt derjenige Knoten festgelegt, um seine lokale Zeit zur Synchronisierung der lokalen Zeit des jeweils anderen Knoten zur Verfügung zu stellen, der zuerst auf eine von einem der beiden Knoten gesendete Nachricht zur Signalisierung einer Anwesenheit - typischerweise eine "Hallo-Nachricht" - eine Quittierungs-Nachricht verschickt. Somit bestimmt ein Knoten, der mit der Versendung einer Nachricht zur Signalisierung einer Anwesenheit seine Anwesenheit einem potentiellen Nachbar-Knoten signalisiert und mit diesem potentiellen Nachbar-Knoten ein ad-hoc-Netzwerk gründen will, den antwortenden Nachbar-Knoten zu seinem lokalen Zeit-Master und synchronisiert seine lokale Zeit an die lokale Zeit des antwortenden Nachbar-Knotens. Auf diese Weise wird der Prozess zur Bestimmung, welcher der beiden Knoten zum lokalen Zeit-Master wird, vereinfacht und damit beschleunigt.

Für den Fall, dass mindestens einer der beiden sich in Übertragungsreichweite zueinander befindenden Knoten in einem ad-hoc-Netzwerk mit mindestens einem weiteren Knoten integriert ist und die lokalen Zeiten aller Knoten in dem sich nun bildenden ad-hoc-Netzwerk eine identische Zeitgenauigkeit aufweisen, wird in der nächst niedrigeren Priorität bevorzugt derjenige Knoten der beiden sich in Übertragungsreichweite zueinander befindenden Knoten zum lokalen Zeit-Master festgelegt, der mit einer größeren Anzahl von Knoten in einem bisher bestehenden ad-hoc-Netzwerk bereits verbunden ist. An seine lokale Zeit werden die lokalen Zeiten aller Knoten, die in dem sich nun bildenden ad-hoc-Netzwerk integriert werden, direkt oder indirekt synchronisiert. Eine derartige Festlegung eines Knoten bedingt einen minimal erforderlichen Synchronisieraufwand zwischen den einzelnen Knoten des sich nun bildenden ad-hoc-Netzwerkes.

Für den Fall, dass die beiden sich in Übertragungsreichweite zueinander befindenden Knoten und die mit diesen beiden Knoten bisher in einem ad-hoc-Netzwerk integrierten Knoten jeweils eine lokale Zeit mit einer identischen Zeitgenauigkeit aufweisen und die Anzahl der mit den beiden sich in Übertragungsreichweite zueinander befindenden Knoten in einem ad-hoc-Netzwerk jeweils integrierten Knoten identisch ist, wird bevorzugt derjenige der beiden sich in Übertragungsreichweite zueinander befindenden Knoten in der niedrigsten Priorität festgelegt, um als lokaler Zeit-Master zu dienen, in dessen angegliedertes ad-hoc-Netzwerk ein Knoten mit der niedrigsten Identität-Nummer integriert ist. Als Identitäts-Nummer wird bevorzugt die Medium-Access-Control(MAC)-Adresse - Medium-Zugriffs-Kontroll-Adresse - des jeweiligen Knoten gewählt.

Entfernt sich mindestens ein Knoten vollständig von einem bestehenden ad-hoc-Netzwerk, so wird, sofern der sich entfernende Knoten im bisherigen ad-hoc-Netzwerk ein lokaler Zeit-Master war, mit der höchsten Priorität vorzugsweise derjenige Knoten des verbleibenden ad-hoc-Netzwerkes als lokaler Zeit-Master festgelegt, dessen lokale Zeit die höchste Zeitgenauigkeit unter den lokalen Zeiten aller im verbleibenden ad-hoc-Netzwerk befindlichen Knoten aufweist.

In der nächst niedrigeren Priorität, wenn alle Knoten des verbleibenden ad-hoc-Netzwerkes eine lokale Zeit mit einer identischen Zeitgenauigkeit aufweisen, wird vorzugsweise derjenige Knoten des verbleibenden ad-hoc-Netzwerkes nach dem vollständigen Entfernen mindestens eines Knoten aus den bisherigen ad-hoc-Netzwerk festgelegt, um als lokaler Zeit-Master zu dienen, der die höchste Anzahl von jeweils direkt benachbarten Knoten aufweist.

Schließlich wird in der niedrigsten Priorität, wenn alle Knoten des verbleibenden ad-hoc-Netzwerkes eine lokale Zeit mit einer identischen Zeitgenauigkeit aufweisen und eine identische Anzahl von jeweils direkt benachbarten Knoten aufweisen, bevorzugt derjenige Knoten des verbleibenden ad-hoc-Netzwerkes nach dem vollständigen Entfernen mindestens eines Knoten aus dem bisherigen ad-hoc-Netzwerk zum lokalen Zeit-Master festgelegt, der die niedrigste Identität-Nummer aufweist.

Das vollständige Entfernen eines Knotens aus einem bestehenden ad-hoc-Netzwerk wird von den Knoten des verbleibenden ad-hoc-Netzwerks vorzugsweise identifiziert, wenn innerhalb eines konstanten Zeitrasters, in denen jeweils eine Nachricht zur Signalisierung einer Anwesenheit übertragen wird, seit dem letzten Empfangszeitpunkt keine weitere Nachricht zur Signalisierung einer Anwesenheit des sich entfernenden Knoten von mindestens einem Knoten des verbleibenden ad-hoc-Netzwerkes empfangen wird.

Ein Knoten eines bisher bestehenden ad-hoc-Netzwerkes, aus dessen Übertragungsreichweite sich ein Knoten entfernt, auf dessen lokale Zeit der Knoten seine lokale Zeit bisher synchronisierte, wird im allgemeinen einen anderen in Übertragungsreichweite befindlichen Knoten des verbleibenden ad-hoc-Netzwerkes festlegen, um seine lokale Zeit an die lokale Zeit des als lokalen Zeit-Master festgelegten Knotens zu synchronisieren. Der sich aus der Übertragungsreichweite des Knotens entfernende Knoten kann sich dabei weiterhin in Übertragungsrate von mindestens einem weiteren Knoten des verbleibenden ad-hoc-Netzwerkes befinden.

Die Synchronisierung der lokalen Zeit eines Knoten an die lokale Zeit des von ihm als lokaler Zeit-Master festgelegten Knotens erfolgt vorzugsweise anhand des vom festgelegten Knoten in seiner Nachricht zur Signalisierung einer Anwesenheit oder in seiner Quittierungs-Nachricht übertragenen Sendezeitzeitpunktes und des ebenfalls übertragenen Empfangszeitpunktes der zugehörigen Quittierungs-Nachricht bzw. Nachricht zur Aktualisierung einer Anwesenheit. Der die Nachricht zur Signalisierung einer Anwesenheit oder die Quittierungs-Nachricht empfangene Knoten kann seine lokale Zeit an die lokale Zeit des als lokalen Zeit-Master festgelegten Knotens durch Vergleich des Empfangszeitpunktes der Nachricht zur Signalisierung einer Anwesenheit bzw. der Quittierungs-Nachricht mit dem übertragenen Sendezeitpunkt der Nachricht zur Signalisierung einer Anwesenheit bzw. der Quittierungs-Nachricht synchronisieren.

Eine Berücksichtigung der auftretenden Übertragungszeit zwischen dem als lokaler Zeit-Master festgelegten Knoten und dem die Zeitsynchronisierung durchführenden Knoten erfolgt vorzugsweise anhand des Vergleichs des Sendezeitpunktes mit dem übertragenen Empfangszeitpunkt der Nachricht zur Signalisierung einer Anwesenheit bzw. der Quittierungs-Nachricht. Diese Zeitsynchronisierung der lokalen Zeit des jeweiligen Knoten an die lokale Zeit des als lokalen Zeit-Master festgelegten Knotens erfolgt nicht nur im Erstkontakt zwischen diesen beiden Knoten, sondern zyklisch in jedem Empfangszeitpunkt einer Nachricht zur Signalisierung einer Anwesenheit bzw. einer Quittierungs-Nachricht.

Da in einem ad-hoc-Netzwerk, das sich nach den obig genannten Mechanismen entwickelt, lediglich ein einziger Knoten als lokaler Zeit-Master für mindestens einen weiteren Knoten dient, der bzw. die wiederum als lokaler Zeit-Master für weitere Knoten des ad-hoc-Netzwerkes dienen, wird indirekt die lokale Zeit jedes Knoten des ad-hoc-Netzwerkes sukzessive auf die lokale Zeit dieses einzigen Knoten ohne eigenen lokalen Zeit-Master synchronisiert.

Um eine Taktdrift einer lokalen Zeit eines Knotens innerhalb des ad-hoc-Netzwerkes, die eine geringere Zeitgenauigkeit als die lokale Zeit des als lokalen Zeit-Master festgelegten Knoten aufweist, zu reduzieren, wird von synchronisierenden Knoten bevorzugt das konstante Zeitraster zur zyklischen Versendung von Nachrichten zur Signalisierung einer Anwesenheit minimiert. Insbesondere wird vom synchronisierenden Knoten der Sendezeitpunkt einer Nachricht zur Signalisierung einer Anwesenheit vorausberechnet, um den Einfluss der Taktdrift auf die Zeitgenauigkeit der lokalen Zeit des synchronisierenden Knotens auf einen bestimmten Wert zu begrenzen.

Ausführungsbeispiele des erfindungsgemäßen Verfahrens und des erfindungsgemäßen Systems zur Zeitsynchronisierung in einem mobilen ad-hoc-Netzwerk werden im Folgenden anhand der Zeichnung im Detail beispielhaft erläutert. Die

Figuren der Zeichnung zeigen:
- Fig. 1: eine Darstellung eines Ausführungsbeispiels des erfindungsgemäßen Systems zur Zeitsynchronisierung in einem mobilen adhoc-Netzwerk,
- Fig. 2: eine beispielhafte Darstellung eines ersten Szenarios für ein ad-hoc-Netzwerk und eines Zeitdiagramms der zwischen den beteiligten Knoten verschickten Nachrichten,
- Fig. 3: eine beispielhafte Darstellung eines zweiten Szenarios für ein ad-hoc-Netzwerk und eines Zeitdiagramms der zwischen den beteiligten Knoten verschickten Nachrichten,
- Fig. 4: eine beispielhafte Darstellung eines dritten Szenarios für ein ad-hoc-Netzwerk und eines Zeitdiagramms der zwischen den beteiligten Knoten verschickten Nachrichten,
- Fig. 5: eine beispielhafte Darstellung eines vierten Szenarios für ein ad-hoc-Netzwerk und eines Zeitdiagramms der zwischen den beteiligten Knoten verschickten Nachrichten,
- Fig. 6: eine beispielhafte Darstellung eines fünften Szenarios für ein ad-hoc-Netzwerk und eines Zeitdiagramms der zwischen den beteiligten Knoten verschickten Nachrichten,
- Fig. 7: eine beispielhafte Darstellung eines sechsten Szenarios für ein ad-hoc-Netzwerk und eines Zeitdiagramms der zwischen den beteiligten Knoten verschickten Nachrichten,
- Fig. 8: eine beispielhafte Darstellung eines siebten Szenarios für ein ad-hoc-Netzwerk und eines Zeitdiagramms der zwischen den beteiligten Knoten verschickten Nachrichten,
- Fig. 9: eine beispielhafte Darstellung eines Zeitdiagramms der in einzelnen Knoten eines adhoc-Netzwerkes jeweils auftretenden Zeitungenauigkeiten und
- Fig. 10: ein Flussdiagramm eines Ausführungsbeispiels des erfindungsgemäßen Verfahrens zur Zeitsynchronisierung in einem mobilen ad-hocNetzwerk.

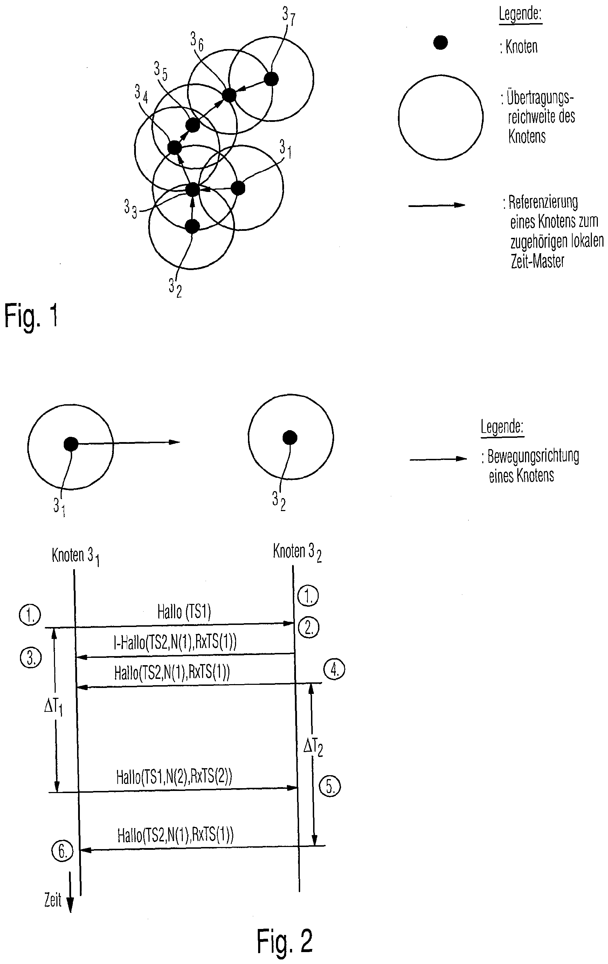

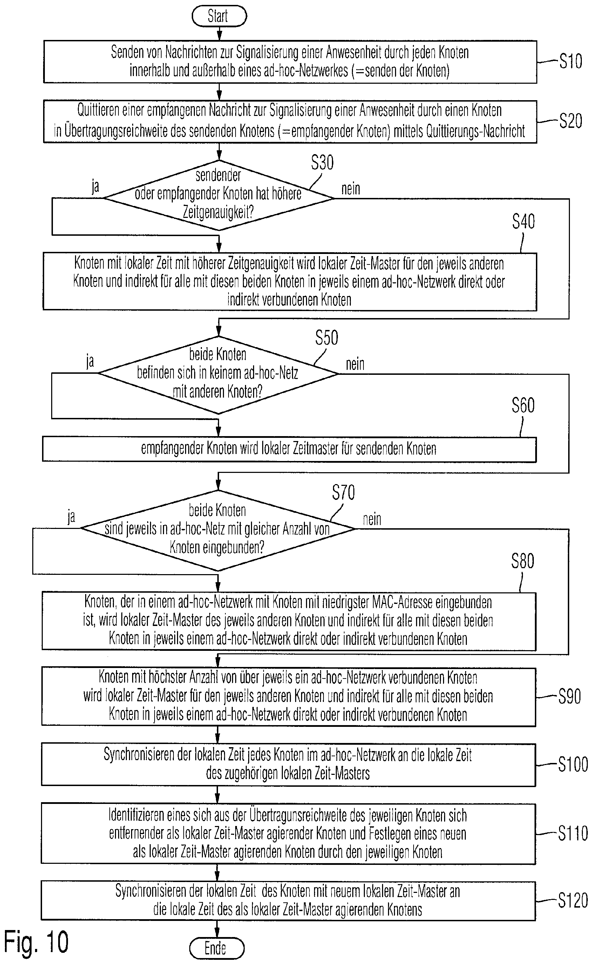

Das erfindungsgemäße System zur Zeitsynchronisierung in einem mobilen ad-hoc-Netzwerk wird im Folgenden anhand der Darstellung gemäß Fig. 1 und das erfindungsgemäße Verfahren zur Zeitsynchronisierung in einem mobilen ad-hoc-Netzwerk wird anhand des Flussdiagramms gemäß Fig. 10 im Detail erläutert.

Im ersten Verfahrensschritt S10 des erfindungsgemäßen Verfahrens sendet jeder Knoten innerhalb oder außerhalb eines ad-hoc-Netzwerkes kontinuierlich in einem bestimmten konstanten Zeitraster eine Nachricht zur Signalisierung seiner Anwesenheit 1, insbesondere eine "Hallo-Nachricht" ("Hello Message"), um Nachbar-Knoten, die sich in seiner Übertragungsreichweite befinden, seine Anwesenheit zu signalisieren. Dieses konstante Zeitraster der Versendung einer Nachricht zur Signalisierung seiner Anwesenheit ist bei jedem Knoten typischerweise nicht identisch, sondern weist bei jedem Knoten jeweils einen unterschiedlichen Wert auf.

Die Nachricht zur Signalisierung einer Anwesenheit 1 eines Knoten i beinhaltet typischerweise folgende Inhalte:
- eine Identitäts-Kennung des Knoten i, die typischerweise die Medium-Access-Control(MAC)-Adresse - Medium-Zugriffs-Kontroll-Adresse - des Knoten i ist,
- den Sendezeitpunkt TSᵢ des Knotens i in der lokalen Zeit des Knotens i,
- die benachbarten Knoten N(i₁,i₂,i₃,...) im Fall von identifizierte Knoten innerhalb der Übertragungsreichweite des Knotens i,
- die Empfangszeitpunkte RxTS(i₁,i₂,i₃,...) von Nachrichten zur Signalisierung einer Anwesenheit, die sich innerhalb der Übertragungsreichweite des Knoten i befinden und
- die Zeitgenauigkeit der lokalen Zeit des Knoten i.

Der eine Nachricht zur Signalisierung einer Anwesenheit 1 versendende Knoten wird im Folgenden sendender Knoten genannt.

Im nächsten Verfahrensschritt S20 wird die von einem Knoten i versendete Nachricht zur Signalisierung einer Anwesenheit 1 von einem Knoten j, der sich in der Übertragungsreichweite des Knotens i befindet und somit die Nachricht zur Signalisierung einer Anwesenheit 1 des Knoten i empfängt, mit einer Quittierungs-Nachricht 2, insbesondere einer "I-Hallo-Nachricht" quittiert. Diese Quittierungs-Nachricht 2 wird unmittelbar nach dem Empfang der Nachricht zur Signalisierung einer Anwesenheit 1 durch den Knoten j versendet. Um das gleichzeitige Versenden einer Quittierungs-Nachricht 2 durch mehrere Knoten, die die Nachricht zur Signalisierung einer Anwesenheit 1 des Knotens i mehr oder weniger gleichzeitig empfangen, und damit eine Blockierung des Übertragungskanals im ad-hoc-Netzwerk zu vermeiden, erfolgt die Versendung der Quittierungs-Nachricht 2 durch den einzelnen Knoten jeweils um eine geringe und von Knoten zu Knoten jeweils verschiedene Verzögerungszeit verzögert gegenüber dem Empfangszeitpunkt der Nachricht zur Signalisierung einer Anwesenheit 1.

Eine Quittierungs-Nachricht 2 enthält die gleichen Inhalte wie eine Nachricht zur Signalisierung einer Anwesenheit 1. Der eine Nachricht zur Signalisierung einer Anwesenheit 1 empfangende und eine Quittierungs-Nachricht 2 sendende Knoten wird im Folgenden empfangender Knoten genannt.

Neben den jeweils eine Nachricht zur Signalisierung einer Anwesenheit 1 oder jeweils eine Quittierungs-Nachricht 2 sendenden Knoten, die bereits einem ad-hoc-Netzwerk angehören und somit mit allen Knoten des ad-hoc-Netzwerkes zeitsynchronisiert sind, existieren auch Knoten, die jeweils eine Nachricht zur Signalisierung einer Anwesenheit 1 oder jeweils eine Quittierungs-Nachricht 2 infolge einer empfangenen Nachricht zur Signalisierung einer Anwesenheit 1 versenden und noch keinem ad-hoc-Netzwerk angehören. Für derartige Knoten, die auf der Suche nach einem ad-hoc-Netzwerk sind, ergibt sich mit dem Empfang einer Nachricht zur Signalisierung einer Anwesenheit 1 oder einer Quittierungs-Nachricht 2 eines anderen Knoten die Möglichkeit, mit diesem anderen Knoten ein ad-hoc-Netzwerk zu bilden. Befindet sich der jeweils andere Knoten selbst noch nicht in einem ad-hoc-Netzwerk, so kommt es zu einer Neugründung eines ad-hoc-Netzwerkes zwischen diesen beiden Knoten. Ist der jeweils andere Knoten bereits in einem ad-hoc-Netzwerk integriert, so wird der Knoten, der ein ad-hoc-Netzwerk sucht, in das bestehende ad-hoc-Netzwerk des jeweils anderen Knoten aufgenommen. Schließlich können die beiden Knoten, die über die Versendung und den Empfang einer Nachricht zur Signalisierung einer Anwesenheit 1 oder einer Quittierungs-Nachricht 2 miteinander in Kontakt treten, jeweils einem unterschiedlichen ad-hoc-Netzwerk angehören. Durch die Kontaktaufnahme zwischen diesen beiden Knoten kann eine Zusammenführung der beiden ad-hoc-Netzwerke zu einem einzigen Gesamt-ad-hoc-Netzwerk erzielt werden.

Um eine Zeitsynchronisierung zwischen den beiden Knoten im zu gründenden ad-hoc-Netzwerk bzw. eine Zeitsynchronisierung zwischen allen Knoten im erweiterten ad-hoc-Netzwerk zu verwirklichen, wird für jeden Knoten des zu gründenden bzw. des erweiterten ad-hoc-Netzwerkes ein in direkter Nachbarschaft befindlicher Knoten festgelegt, der für den jeweils anderen Knoten ein lokaler Zeit-Master darstellt und an dessen lokaler Zeit der jeweils andere Knoten seine lokale Zeit synchronisiert. Da jeder Knoten im nun entstehenden ad-hoc-Netzwerk seine lokale Zeit an die lokale Zeit des zugehörigen lokalen Zeit-Masters synchronisiert, sind alle Knoten des nun entstehenden ad-hoc-Netzwerkes zueinander zeitsynchronisiert. Aus Fig. 1, das das Ausführungsbeispiel des erfindungsgemäßen Systems zur Zeitsynchronisierung in einem mobilen ad-hoc-Netzwerk darstellt, sind einzelne Knoten 31, 32, 33, 34, 35, 36 und 37 ersichtlich, die jeweils in Übertragungsreichweite zueinander positioniert sind und somit ein ad-hoc-Netzwerk bilden. Der für jeden einzelnen dieser Knoten 31, 32, 33, 34, 35, 36 und 37 jeweils festgelegte lokale Zeit-Master geht hierbei aus der Pfeilrichtung der Verbindungsgerade zwischen jeweils zwei benachbarten Knoten hervor.

Die Festlegung des zum jeweiligen Knoten gehörigen lokalen Zeit-Masters innerhalb des nun entstehenden ad-hoc-Netzwerkes erfolgt über eine Prioritäts-Hierarchie.

In der höchsten Priorität wird derjenige Knoten des entstehenden ad-hoc-Netzwerkes identifiziert, der die lokale Zeit mit der jeweils höchsten Zeitgenauigkeit aufweist und somit zum lokalen Zeit-Master festgelegt wird. Gemäß dem nächsten Verfahrensschritt S30 wird ermittelt, ob die in der gesendeten Nachricht zur Signalisierung einer Anwesenheit 1 oder in der gesendeten Quittierungs-Nachricht 2 enthaltene Zeitgenauigkeit der lokalen Zeit der beiden Knoten - sendender Knoten oder empfangender Knoten - jeweils einen höheren Wert aufweist.

Weist der sendende Knoten oder der empfangende Knoten eine höhere Zeitgenauigkeit in seiner lokalen Zeit auf, so wird im nächsten Verfahrensschritt S40 derjenige Knoten, der die höhere Zeitgenauigkeit in seiner lokalen Zeit aufweist, zum lokalen Zeit-Master des jeweils anderen Knoten. Aufgrund der Zeitreferenzierung jedes Knoten zu einem direkt benachbarten Knoten in einem ad-hoc-Netzwerk gemäß Fig. 1 werden alle Knoten, die in einem ad-hoc-Netzwerk mit dem sendenden oder empfangenden Knoten bereits verbunden sind, der seine lokale Zeit auf die lokale Zeit des als lokalen Zeit-Master agierenden empfangenden oder sendenden Knoten referenziert, ihre lokale Zeit indirekt auf die lokale Zeit dieses lokalen Zeit-Masters synchronisieren. Die Knoten, die mit dem als lokaler Zeit-Master agierenden Knoten in einem ad-hoc-Netzwerk bereits verbunden sind, bleiben in ihrer Zeitreferenzierung zu einem jeweils benachbarten und als lokaler Zeit-Master agierenden Knoten unverändert.

Weisen die lokalen Zeiten des sendenden und empfangenden Knotens jeweils eine identische Zeitgenauigkeit auf, so wird in der nächst niedrigeren Priorität im darauf folgenden Verfahrensschritt S50 ermittelt, ob die beiden miteinander in Kontakt tretenden Knoten - sendender Knoten und empfangender Knoten - jeweils Knoten ohne Einbindung in ein bestehendes ad-hoc-Netzwerk sind oder, ob einer der beiden Knoten oder beide Knoten jeweils in einem ad-hoc-Netzwerk bereits integriert sind.

Ist sowohl der sendende Knoten als auch der empfangende Knoten jeweils in keinem ad-hoc-Netzwerk bisher eingebunden, so wird gemäß dem darauf folgenden Verfahrensschritt S60 der eine Nachricht zur Signalisierung einer Anwesenheit 1 empfangende Knoten zum lokalen Zeit-Master des eine Nachricht zur Signalisierung einer Anwesenheit 1 sendenden Knotens festgelegt.

Für den Fall, dass mindestens ein Knoten bisher in einem ad-hoc-Netzwerk eingebunden ist, wird in einem darauf folgenden Verfahrensschritt S70 ermittelt, ob beide Knoten jeweils in einem ad-hoc-Netzwerk mit einer gleichen Anzahl von Knoten eingebunden ist. Ist dies der Fall, so wird im nächsten Verfahrensschritt S80 derjenige Knoten der beiden zueinander in Kontakt tretenden Knoten zum lokalen Zeit-Master festgelegt, der bisher in einem ad-hoc-Netzwerk mit einem Knoten eingebunden ist, der die niedrigste Medium-Access-Control(MAC)-Adresse - Medium-Zugriffs-Kontroll-Adresse - aufweist. Dieser Knoten wird nicht nur für den jeweils anderen Knoten der beiden in Kontakt tretenden Knoten zum lokalen Zeit-Master, sondern dient aufgrund des sukzessiven Zeitreferenzierung zwischen jedem Knoten des ad-hoc-Netzwerkes und seinem zugehörigen als lokalen Zeit-Master agierenden benachbarten Knoten indirekt als lokaler Zeit-Master für alle Knoten, die mit den jeweils anderen Knoten in einem ad-hoc-Netzwerk integriert sind.

Sind beide jeweils in einem Kontakt zueinander tretenden Knoten bisher in einem ad-hoc-Netzwerk mit einer jeweils unterschiedlichen Anzahl von Knoten eingebunden oder ist ein Knoten überhaupt nicht in einem ad-hoc-Netzwerk integriert, während der jeweils andere Knoten schon bisher einem ad-hoc-Netzwerk angehört, so wird gemäß dem folgenden Verfahrensschritt S90 derjenige der beiden zueinander in Kontakt tretenden Knoten zum lokalen Zeit-Master des jeweils anderen Knoten, der in dem ad-hoc-Netzwerk mit der höchsten Anzahl von Knoten eingebunden ist. Die Knoten, die sich mit dem nicht zum lokalen Zeit-Master festgelegten Knoten der beiden in einem Kontakt zueinander tretenden Knoten in einem ad-hoc-Netzwerk befinden, synchronisieren ihre lokale Zeit indirekt ebenfalls aufgrund des sukzessiven Zeitreferenzierung zwischen jedem Knoten des ad-hoc-Netzwerkes und seinem zugehörigen als lokalen Zeit-Master dienenden benachbarten Knoten auf die lokale Zeit dieses als lokalen Zeit-Master festgelegten Knoten.

Jeder Knoten in einem derart entstehenden ad-hoc-Netzwerk synchronisiert im nächsten Verfahrensschritt S100 seine lokale Zeit auf die lokale Zeit seines zugehörigen lokalen Zeit-Masters. Hierzu verwendet der jeweilige Knoten die Zeitinformationen, die in einer aktuell vom zugehörigen als lokaler Zeit-Master agierenden Knoten empfangenen Nachricht zur Signalisierung einer Anwesenheit 1 oder Quittierungs-Nachricht 2 enthalten sind. Hierbei handelt es sich einerseits um den in der lokalen Zeit des als lokaler Zeit-Master agierenden Knoten ermittelten Sendezeitpunkt der jeweiligen Nachricht zur Signalisierung einer Anwesenheit 1 oder der jeweiligen Quittierungs-Nachricht 2 und um den in der lokalen Zeit des als lokaler Zeit-Master agierenden Knoten ermittelten Empfangszeitpunkt der zuletzt vom jeweiligen Knoten gesendeten Nachricht zur Signalisierung einer Anwesenheit 1 oder Quittierungs-Nachricht 2 beim als lokaler Zeit-Master agierenden Knoten.

Der seine lokale Zeit an die lokale Zeit des jeweiligen lokalen Zeit-Masters synchronisierende Knoten synchronisiert seine lokale Zeit, indem er die Synchronisierung seiner lokalen Zeit an die lokale Zeit des als lokaler Zeit-Master agierenden Knoten wie auch die Ermittlung der Übertragungszeit zwischen dem synchronisierenden Knoten und dem als lokalen Zeit-Master agierenden Knoten einerseits aus dem in der lokalen Zeit des synchronisierenden Knotens ermittelten Sendezeitpunkt und dem in der lokalen Zeit des als lokaler Zeit-Master agierenden Knotens ermittelten Empfangszeitpunkt der jeweiligen Nachricht zur Signalisierung einer Anwesenheit 1 oder der jeweiligen Quittierungs-Nachricht 2 und andererseits aus dem in der lokalen Zeit des synchronisierenden Knotens ermittelten Empfangszeitpunkt und dem in der lokalen Zeit des als lokaler Zeit-Master agierenden Knotens ermittelten Sendezeitpunktes der darauf folgenden Quittierungs-Nachricht 2 oder der Nachricht zur Signalisierung einer Anwesenheit 1 bestimmt.

Im darauffolgenden Verfahrensschritt S110 wird ein u.U. auftretendes Entfernen eines Knotens oder mehrerer Knoten aus dem bestehenden ad-hoc-Netzwerk identifiziert. Hierzu wird von jedem Knoten des ad-hoc-Netzwerkes überprüft, ob von jedem in der Übertragungsreichweite des jeweiligen Knotens positionierten Nachbar-Knoten jeweils innerhalb eines festgesetzten Zeitintervalls seit dem letzten Empfangszeitpunkt einer Nachricht zur Signalisierung einer Anwesenheit 1 des jeweiligen Nachbar-Knotens eine weitere Nachricht zu Signalisierung einer Anwesenheit 1 des jeweiligen Nachbar-Knotens empfangen wird. Trifft dies zu, so befindet sich der jeweilige Nachbar-Knoten noch innerhalb der Übertragungsreichweite des überprüfenden Knoten. Empfängt der jeweilige Knoten aber keine weitere Nachricht zur Signalisierung einer Anwesenheit 1 des jeweiligen Nachbar-Knoten innerhalb des festgelegten Zeitintervall, so hat sich der jeweilige Nachbar-Knoten zumindest aus der Übertragungsreichweite des überprüfenden Knoten, u.U. sogar aus der Übertragungsreichweite des gesamten ad-hoc-Netzwerkes, entfernt. Ist der Knoten, der sich aus der Übertragungsreichweite des überprüfenden Knoten entfernt hat, ein lokaler Zeit-Master für den überprüfenden Knoten, so muss der überprüfende Knoten einen neuen als lokaler Zeit-Master agierenden Knoten suchen. U.U. befindet sich der überprüfende Knoten inzwischen aufgrund des Entfernens des als lokaler Zeit-Master agierenden Knoten aus der Übertragungsreichweite des überprüfenden Knoten auch außerhalb des ad-hoc-Netzwerkes.

Der jeweilige Knoten ohne Zeitreferenz zu einem als lokaler Zeit-Master agierenden Knoten ist gezwungen, einen neuen als lokalen Zeit-Master dienenden Knoten zu suchen. Befindet sich der jeweilige Knoten ohne Zeitreferenz weiterhin noch in Übertragungsreichweite zu einem anderen Knoten und damit in einem ad-hoc-Netzwerk mit dem anderen Knoten, so kann er diesen anderen Knoten zu seinem lokalen Zeit-Master wählen. Befindet sich der jeweilige Knoten ohne Zeitreferenz jedoch nicht mehr in Übertragungsreichweite zu einem anderen Knoten und damit auch nicht mehr in einem ad-hoc-Netzwerk mit einem oder mehreren Knoten, so ist er gezwungen, nach den oben beschriebenen Verfahrensschritten S10 bis S90 Kontakt zu einem anderen Knoten mit oder ohne angegliederten ad-hoc-Netzwerk aufzunehmen.

Im abschließenden Verfahrensschritt S120 erfolgt in Analogie zu Verfahrensschritt S100 eine Synchronisierung der lokalen Zeit des Knoten, der Kontakt zu einem Knoten mit oder ohne angegliederten ad-hoc-Netzwerk aufgenommen hat und diesen Knoten zu seinem lokalen Zeit-Master festlegt, auf die lokale Zeit des als lokalen Zeit-Master festgelegten Knoten.

Im Folgenden wird das soeben beschriebene Ausführungsbeispiel des erfindungsgemäßen Verfahrens zur Zeitsynchronisierung in einem mobilen ad-hoc-Netz anhand der in den Figuren 2 bis 8 jeweils dargestellten Szenarien im Detail noch vertieft.

Im ersten Szenario in Fig. 2 werden zwei Knoten ohne ein angegliedertes ad-hoc-Netz betrachtet, die sich aufeinander zubewegen und ab einem bestimmten Zeitpunkt innerhalb der Übertragungsreichweite zueinander positioniert sind.

Zum Zeitpunkt (1), in dem der Knoten 3₁ eine Nachricht zur Signalisierung einer Anwesenheit 2 versendet, kennen die beiden Knoten 3₁ und 3₂ die Anwesenheit des jeweils anderen Knoten nicht. Der Knoten 3₁ versendet folglich eine "Hallo-Nachricht", die einzig die Identität des Knotens 3₁, den Sendezeitpunkt TS₁ der vom Knoten 3₁ versendeten "Hallo-Nachricht" in der lokalen Zeit des Knoten 3₁, die Zeitgenauigkeit der lokalen Zeit des Knoten 3₁ und die MAC-Adresse des Knoten 3₁ enthält.

Diese "Hallo-Nachricht" des Knotens 3₁ wird zum Zeitpunkt (2) vom Knoten 3₂ empfangen und unmittelbar mit einer Quittierungs-Nachricht 2 in Form einer "I-Hallo-Nachricht" quittiert, die neben der Identität des Knoten 3₂, der Zeitgenauigkeit der lokalen Zeit Knoten 3₂ und der MAC-Adresse des Knotens 3₂ den Sendezeitpunkt TS₂ der "I-Hallo-Nachricht" des Knoten 3₂ in der lokalen Zeit des Knoten 3₂, den identifizierten Nachbarknoten 3₁ und in Empfangszeitpunkt RxTS(1) der "Hallo-Nachricht" des Knoten 3₁ enthält. Für Knoten 3₂ dient Knoten 3₁ zum Zeitpunkt (2) als lokaler Zeit-Master, da Knoten 3₂ seine lokale Zeit zumindest grob - ohne Berücksichtigung der Übertragungszeit der von Knoten 3₁ versendeten "Hallo-Nachricht" zwischen Knoten 3₁ und Knoten 3₂ - an die lokale Zeit Knoten 3₁ synchronisieren kann, indem er seine lokale Zeit um die Differenz zwischen dem in seiner lokalen Zeit ermittelten Empfangszeitpunkt der "Hallo-Nachricht" von Knoten 3₁ und dem in der lokalen Zeit des Knoten 3₁ ermittelten Sendezeitpunkt der "Hallo-Nachricht" von Knoten 3₁ an die lokale Zeit des als lokalen Zeit-Masters agierenden Knoten 3₁ anpasst. Zum Zeitpunkt (2) besteht lediglich für Knoten 3₂ die Erkenntnis, dass eine funktionierende Übertragungsverbindung von Knoten 3₁ zu Knoten 3₂ besteht. Somit liegt zum Zeitpunkt (2) lediglich eine asymmetrische Übertragungsverbindung zwischen Knoten 3₁ und Knoten 3₂ vor.

Zum Zeitpunkt (3) wird die "I-Hallo-Nachricht" des Knotens 3₂ vom Knoten 3₁ empfangen. Zum Zeitpunkt (3) besteht lediglich für Knoten 3₁ die Erkenntnis, dass eine funktionierende Übertragungsverbindung von Knoten 3₁ zu Knoten 3₂ und von Knoten 3₂ zu Knoten 3₁ besteht. Somit liegt auch zum Zeitpunkt (2) lediglich eine asymmetrische Übertragungsverbindung zwischen Knoten 3₁ und Knoten 3₂ vor. Knoten 3₁ wird zum Zeitpunkt (3) Knoten 3₂ zu seinem lokalen Zeit-Master festlegen, da die Zeitgenauigkeit des Knoten 3₂ der Zaungenauigkeit von Knoten 3₁ entspricht und Knoten 3₁ über die "I-Hallo-Nachricht" von Knoten 3₂ erfährt, dass Knoten 3₂ keine Nachbar-Knoten in seiner Übertragungsreichweite besitzt und somit in keinem ad-hoc-Netzwerk eingebunden ist. Da somit Knoten 3₁ und Knoten 3₂ eine gleiche Anzahl von jeweils benachbarten Knoten - nämlich genau einen einzigen Nachbar-Knoten - aufweisen, erkennt Knoten 3₁, dass Knoten 3₂ sein lokaler Zeit-Master wird, da er derjenige Knoten war, der als erster Knoten eine "Hallo-Nachricht" verschickt hat. Knoten 3₁ wird deshalb seine lokale Zeit auf die lokale Zeit seines als lokaler Zeit-Master agierenden Knoten 3₂ synchronisieren und dabei im Gegensatz zur groben Synchronisierung des Knoten 3₂ eine exakte Synchronisierung unter Berücksichtigung der Übertragungszeit zwischen Knoten 3₁ und Knoten 3₂ erzielen.

Aus Fig. 2 ist ersichtlich, dass Knoten 3₂ in seinem konstanten zyklischen Zeitraster zum Zeitpunkt (4) eine "Hallo-Nachricht" unmittelbar nach Versendung einer "I-Hallo-Nachricht" verschickt. Um die Übertragungskapazität des Übertragungskanals durch die Versendung von "Hallo-Nachrichten" und "I-Hallo-Nachrichten" nicht unnötig zu belasten, kann die Versendung einer "Hallo-Nachricht", die innerhalb eines festgelegten Zeitintervalls nach Versendung einer "I-Hallo-Nachricht" üblicherweise erfolgt, unterdrückt werden.

Eine weitere im zyklischen Zeitraster Δ*T*₁ durch Knoten 3₁ versendete "Hallo-Nachricht", in der im Gegensatz zur ersten "Hallo-Nachricht" des Knotens 3₁ der als Nachbarknoten N(2) identifizierte Knoten 3₂ und die Empfangszeit RxTS(2) der vom identifizierten Nachbarknoten 3₂ versendeten "Hallo-Nachricht" in der lokalen Zeit des Knoten 3₁ übertragen werden, wird vom Knoten 3₂ zum Zeitpunkt (5) empfangen. Ab dem Zeitpunkt (5) liegt zwischen Knoten 3₁ und Knoten 3₂ eine symmetrische Übertragungsverbindung vor, da sowohl Knoten 3₁ als auch Knoten 3₂ erkannt haben, dass eine funktionierende Übertragungsverbindung von Knoten 3₁ nach Knoten 3₂ und von Knoten 3₂ nach Knoten 3₁ besteht.

Eine weitere im zyklischen Zeitraster Δ*T*₂ durch Knoten 3₂ versendete "Hallo-Nachricht" wird zum Zeitpunkt (6) von Knoten 3₁ empfangen. Zum Zeitpunkt (6) erfolgt durch Knoten 3₁ eine erneute zyklische Synchronisierung seiner lokalen Zeit an die lokale Zeit des als lokalen Zeit-Master für Knoten 3₁ agierenden Knoten 3₂.

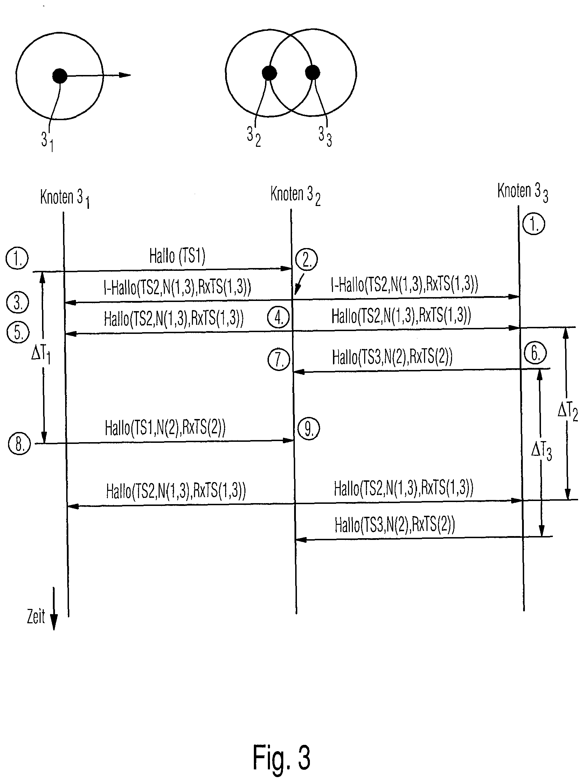

Im zweiten Szenario in Fig. 3 nähert sich ein Knoten 3₁ einem Knoten 3₂, der in Übertragungsreichweite zu einem Knoten 3₃ positioniert ist und somit mit diesem Knoten 3₃ bereits ein ad-hoc-Netzwerk bildet.

Zum Zeitpunkt (1) sendet der Knoten 3₁, der mit keinem anderen Knoten ein ad-hoc-Netzwerk bildet, eine "Hallo-Nachricht". Diese "Hallo-Nachricht" wird zum Zeitpunkt (2) von dem in Übertragungsreichweite zum Knoten 3₁ positionierten Knoten 3₂ empfangen. Während für Knoten 3₂ zum Zeitpunkt (2) zu Knoten 3₃ aufgrund des bereits seit längerem bestehenden gemeinsamen ad-hoc-Netzwerkes eine symmetrische Übertragungsverbindung besteht, besteht zwischen Knoten 3₂ und Knoten 3₁ lediglich eine asymmetrische Übertragungsverbindung, da einzig Knoten 3₂ erkennt, dass eine korrekte Übertragung von Knoten 3₁ zu Knoten 3₂ realisiert ist. Zum Zeitpunkt (2) wird von Knoten 3₂ der im gemeinsamen ad-hoc-Netzwerk befindliche Knoten 3₃ zu seinem lokalen Zeit-Master festgelegt.

Die von Knoten 3₂ zum Zeitpunkt (2) empfangene "Hallo-Nachricht" wird von Knoten 3₂ mit einer "I-Hallo-Nachricht" quittiert, die neben der Identität des Knoten 3₂, der Zeitgenauigkeit der lokalen Zeit des Knotens 3₂ und der MAC-Adresse des Knotens 3₂ die dem Knoten 3₂ zum Zeitpunkt (2) bekannten Nachbarknoten 3₁ und 3₃ und die Empfangszeitpunkte RxTS(1,3) der vom Knoten 3₁ soeben empfangenen "Hallo-Nachricht" und der letzten im zyklischen Zeitraster Δ*T*₃ von Knoten 3₃ empfangenen "Hallo-Nachricht" enthält.

Zum Zeitpunkt (3) wird die "I-Hallo-Nachricht" des Knoten 3₂ von Knoten 3₁ und Knoten 3₃ empfangen. Knoten 3₁ erkennt zum Zeitpunkt (3), dass Knoten 3₂ sein lokaler Zeit-Master wird, da Knoten 3₁ über die "I-Hallo-Nachricht" des Knoten 3₂ erfährt, dass Knoten 3₂ sich in einem ad-hoc-Netzwerk mit Knoten 3₃ befindet und somit Knoten 3₂ eine größere Anzahl von Nachbarknoten in einem ad-hoc-Netzwerk aufweist als Knoten 3₁. Die Übertragungsverbindung zwischen Knoten 3₁ und Knoten 3₂ ist zum Zeitpunkt (3) nach wie vor asymmetrisch, da einzig Knoten 3₁ erkennt, dass die Übertragung von Knoten 3₁ nach Knoten 3₂ und von Knoten 3₂ nach Knoten 3₁ korrekt funktioniert.

Zum Zeitpunkt (4) sendet Knoten 3₂ in seinem zyklischen Zeitraster Δ*T*₂ eine weitere "Hallo-Nachricht", die Knoten 3₁ zum Zeitpunkt (5) empfängt. Knoten 3₁ synchronisiert zum Zeitpunkt (5) seine lokale Zeit an die lokale Zeit seines lokalen Zeit-Masters, des Knoten 3₂, aus den Zeitinformationen, die in der "Hallo-Nachricht" des Knoten 3₂ enthalten sind.

Knoten 3₃ sendet in seinem zyklischen Zeitraster Δ*T*₃ zum Zeitpunkt (6) eine "Hallo-Nachricht", die von Knoten 3₂ zum Zeitpunkt (7) empfangen wird. Da Knoten 3₃ der lokale Zeit-Master des Knoten 3₂ darstellt, synchronisiert Knoten 3₂ seine lokale Zeit wiederholt zyklisch zum Zeitpunkt (7) mit den in der "Hallo-Nachricht" des Knotens 3₃ übertragenen Zeitinformationen auf die lokale Zeit des Knoten 3₃.

Eine von Knoten 3₁ zum Zeitpunkt (8) in ihrem zyklischen Zeitraster Δ*T*₁ versendete "Hallo-Nachricht", in der die Information N(2) über den identifizierten Nachbar-Knoten 3₂ und die Empfangszeit RxTS(2) der von dem Knoten 3₂ verschickten "Hallo-Nachricht" enthalten ist, wird von Knoten 3₂ zum Zeitpunkt (9) empfangen. Ab dem Zeitpunkt (9) liegt eine symmetrische Übertragungsverbindung zwischen Knoten 3₁ und Knoten 3₂ vor, da sowohl Knoten 3₁ als auch Knoten 3₂ die korrekte Übertragung von Knoten 3₁ nach Knoten 3₂ und von Knoten 3₂ nach Knoten 3₁ erkannt haben.

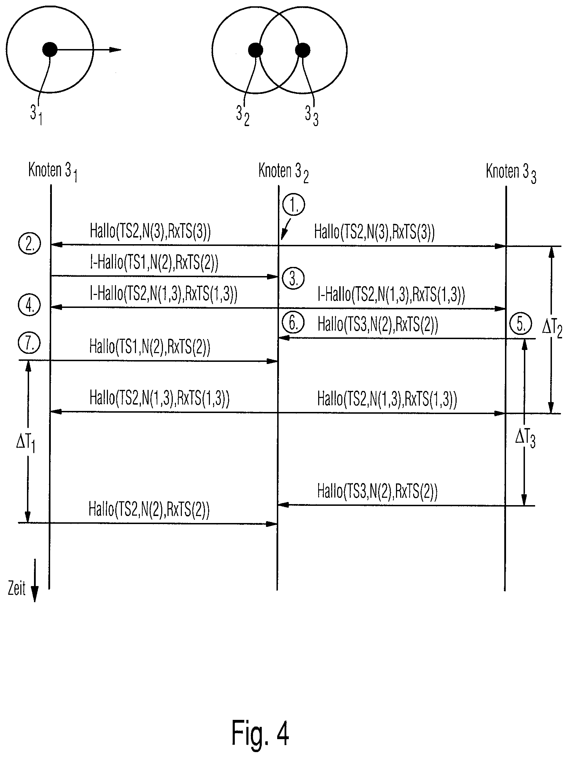

Im dritten Szenario in Fig. 4 nähert sich ebenfalls ein Knoten 3₁ einem Knoten 3₂, der in Übertragungsreichweite zu einem Knoten 3₃ positioniert ist und somit mit Knoten 3₃ ein ad-hoc-Netzwerk bildet.

Zum Zeitpunkt (1) sendet Knoten 3₂ in seinem zyklischen Zeitraster Δ*T*₂ eine "Hallo-Nachricht", die neben seiner Identität, der Zeitgenauigkeit seiner lokalen Zeit und seiner MAC-Adresse die Information N(3) über den bekannten Nachbarknoten 3₃ und die Empfangszeit RxTS(3) der zuletzt empfangenen "Hallo-Nachricht" des Nachbarknoten 3₃ enthält. Diese "Hallo-Nachricht" des Knotens 3₂ wird zum Zeitpunkt (2) von Knoten 3₁ empfangen. Da Knoten 3₁ in dieser "Hallo-Nachricht" des Knotens 3₂ erfährt, dass Knoten 3₂ mit Knoten 3₃ ein ad-hoc-Netzwerk bildet, wird Knoten 3₁ seinen Nachbarknoten 3₂ zu seinem lokalen Zeit-Master festlegen. Eine Synchronisierung der lokalen Zeit des Knotens 3₁ zum Zeitpunkt (2) auf die lokale Zeit des Nachbarknotens 3₂ ist noch nicht möglich, da eine Zeitinformation zur Bestimmung der Übertragungszeit zwischen Knoten 3₁ und Knoten 3₂ noch nicht vorliegt.

Knoten 3₁ wird die "Hallo-Nachricht" des Knotens 3₂ unmittelbar nach deren Empfang mit einer "I-Hallo-Nachricht" quittieren, in der er dem Knoten 3₂ seine Identität, den Sendezeitpunkt TS₁ der "I-Hallo-Nachricht" in der lokalen Zeit des Knoten 3₁, die identifizierte Identität N(2) des Nachbarknotens 3₂ und den Empfangszeitpunkt RxTS(2) der "Hallo-Nachricht" des Nachbarknoten 3₂ mitteilt. Diese "I-Hallo-Nachricht" des Knoten 3₁ wird von Knoten 3₂ zum Zeitpunkt (3) empfangen. Die Identifizierung des Nachbarknoten 3₁ beim Empfang der "I-Hallo-Nachricht" durch Knoten 3₂ wird mit einer weiteren "I-Hallo-Nachricht" des Knoten 3₂ quittiert, in der neben anderen Informationen auch die identifizierte Identität N(1,3) der beiden Nachbarknoten 3₁ und 3₃ und die Empfangszeitpunkte RxTS(1,3) der von Knoten 3₁ empfangenen "I-Hallo-Nachricht" und der von Knoten 3₃ empfangenen "Hallo-Nachricht" enthalten sind.

Diese "I-Hallo-Nachricht" des Knotens 3₂ wird zum Zeitpunkt (4) von Knoten 3₁ empfangen, der aus den Zeitinformationen dieser "I-Hallo-Nachricht" seine lokale Zeit an die lokale Zeit des als lokalen Zeit-Master agierenden Knotens 3₂ synchronisiert. Ab dem Zeitpunkt (4) besteht zwischen Knoten 3₁ und Knoten 3₂ eine symmetrische Übertragungsverbindung, da sowohl Knoten 3₁ als auch Knoten 3₂ die korrekte Übertragung von Knoten 3₁ nach Knoten 3₂ und von Knoten 3₂ nach Knoten 3₁ erkannt haben.

Eine von Knoten 3₃ zum Zeitpunkt (5) in seinem zyklischen Zeitraster Δ*T*₃ versendete "Hallo-Nachricht" wird von Knoten 3₂ zum Zeitpunkt (6) empfangen und dient zur Synchronisierung der lokalen Zeit des Knoten 3₂ an die lokale Zeit des als zugehörigen lokale Zeit-Master agierenden Knoten 3₃. Ab dem Zeitpunkt (7) sendet Knoten 3₁ in seinem zyklischen Zeitraster Δ*T*₁ jeweils eine "Hallo-Nachricht".

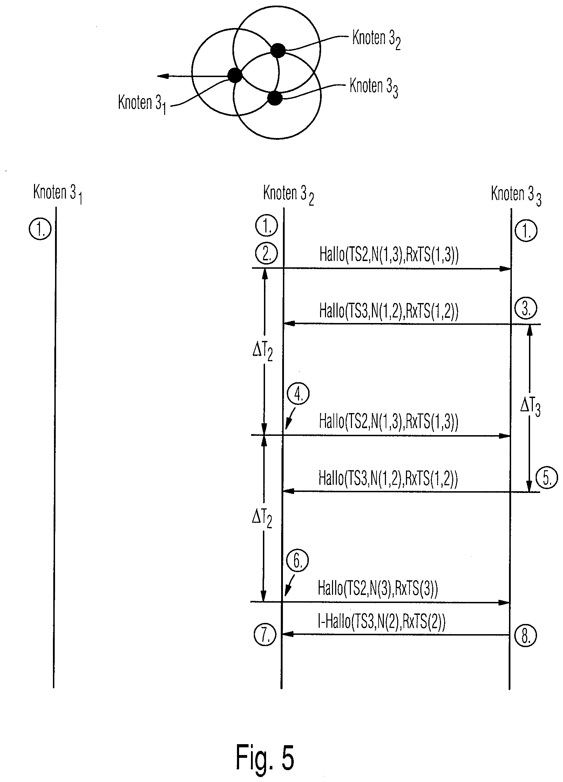

Im vierten Szenario in Fig. 5 entfernt sich ein Knoten 3₁ aus einem ad-hoc-Netzwerk, das ursprünglich aus den Knoten 3₁, 3₂ und 3₃ besteht.

Zum Zeitpunkt (1) besteht sowohl zwischen dem Knoten 3₁ und dem Knoten 3₂ als auch zwischen dem Knoten 3₂ und dem Knoten 3₃ wie auch zwischen dem Knoten 3₁ und dem Knoten 3₃ jeweils eine symmetrische Übertragungsverbindung, da jeder der Knoten 3₁, 3₂ und 3₃ jeweils die Korrektheit einer bidirektionalen Übertragung zu jedem anderen der beiden Knoten erkannt hat. Knoten 3₁ stellt aufgrund seiner niedrigsten MAC-Adresse den lokalen Zeit-Master für die beiden anderen Knoten 3₂ und 3₃ dar.

In den ersten beiden Zeitpunkten (1) und (4) des zyklischen Zeitrasters Δ*T*₂ sendet Knoten 3₂ jeweils eine "Hallo-Nachricht", die einzig von Knoten 3₃ empfangen wird, da sich Knoten 3₁ aus der Übertragungsreichweite von Knoten 3₂ entfernt hat. Knoten 3₂ erkennt zu den beiden Zeitpunkten (1) und (4) das Entfernen von Knoten 3₁ aus dem gemeinsamen ad-hoc-Netzwerk noch nicht und überträgt deshalb in seiner "Hallo-Nachricht" neben anderen Informationen auch die identifizierte Identität N(1,3) der beiden Nachbarknoten 3₁ und 3₃ im gemeinsamen ad-hoc-Netzwerk und die Empfangszeitpunkte RxTS(1,3) der zuletzt empfangenen "Hallo-Nachrichten" der beiden Nachbarknoten 3₁ und 3₃.

Auch Knoten 3₃ erkennt das Entfernen von Knoten 3₁ aus dem gemeinsamen ad-hoc-Netzwerk zu den Sendezeitpunkten (3) und (5) der im zyklischen Zeitraster Δ*T*₃ gesendeten "Hallo-Nachricht" und überträgt deshalb in seiner "Hallo-Nachricht" neben anderen Informationen auch die identifizierte Identität N(1,2) der beiden Nachbarknoten 3₁ und 3₂ im gemeinsamen ad-hoc-Netzwerk und die Empfangszeitpunkte RxTS(1,2) der zuletzt empfangenen "Hallo-Nachrichten" der beiden Nachbarknoten 3₁ und 3₂.

Erst zum Sendezeitpunkt (6) erkennt Knoten 3₂ das Entfernen von Knoten 3₁ aus seiner Übertragungsreichweite und überträgt deshalb in seiner "Hallo-Nachricht" neben anderen Informationen nur noch die identifizierte Identität N(3) des Nachbarknotens 3₃ und den Empfangszeitpunkt RxTs(3) der von Knoten 3₃ zuletzt empfangenen "Hallo-Nachricht". Die in der "Hallo-Nachricht" von Knoten 3₂ enthaltene Mitteilung, dass sich Knoten 3₁ aus der Übertragungsreichweite von Knoten 3₂ entfernt hat, wird von Knoten 3₃ mit einer "I-Hallo-Nachricht" unmittelbar nach Empfang der "Hallo-Nachricht" von Knoten 3₂ quittiert.

Zum Empfangszeitpunkt (7) der von Knoten 3₃ verschickten "I-Hallo-Nachricht" bei Knoten 3₂ wird Knoten 3₃ zum neuen lokalen Zeit-Master von Knoten 3₂. Knoten 3₂ synchronisiert zum Zeitpunkt (7) seine lokale Zeit mit den Zeitinformationen der "I-Hallo-Nachricht" des Knoten 3₃ auf die lokale Zeit des Knotens 3₃.

Knoten 3₃ erkennt ab einen bestimmten Zeitpunkt (8), dass Knoten 3₁ sich auch aus seiner Übertragungsreichweite entfernt hat und folgert daraus, dass er selbst ab sofort zum lokalen Zeit-Master für Knoten 3₂ wird und somit seine eigene lokale Zeit nicht mehr an die lokale Zeit eines anderen Knoten des ad-hoc-Netzwerkes synchronisieren muss.

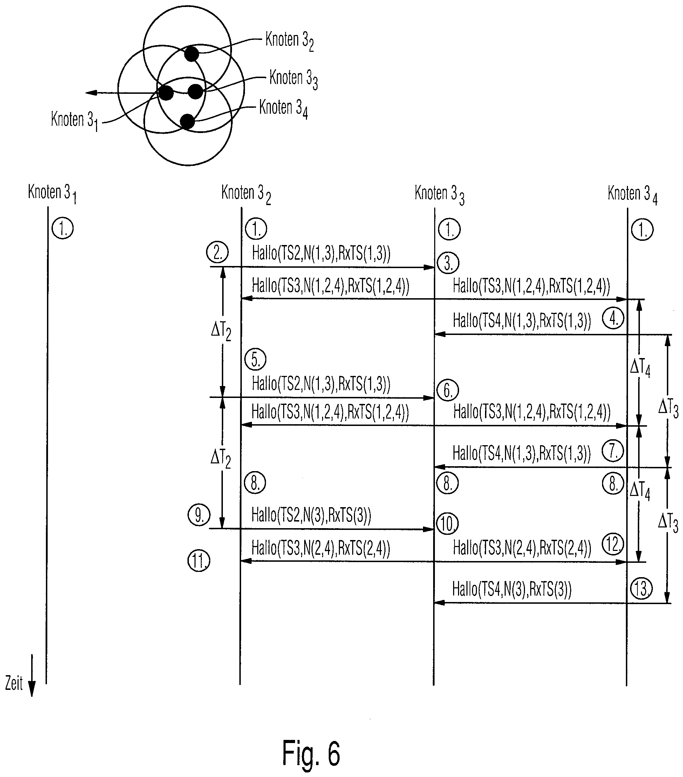

Im fünften Szenario in Fig. 6 entfernt sich ein Knoten 3₁ aus einem gemeinsamen ad-hoc-Netzwerk, das aus den Knoten 3₁, 3₂, 3₃ und 3₄ ursprünglich gebildet ist.

In der Konfiguration des fünften Szenarios besteht zum Zeitpunkt (1) eine symmetrische Übertragungsverbindung des Knoten 3₁ zu den beiden Knoten 3₂ und 3₃, eine symmetrische Übertragungsverbindung des Knoten 3₂ zu den beiden Knoten 3₁ und 3₃, eine symmetrische Übertragungsverbindung des Knotens 3₃ mit den Knoten 3₁, 3₂ und 3₃ und eine symmetrische Übertragungsverbindung des Knotens 3₄ mit den beiden Knoten 3₁ und 3₂. Knoten 3₃ agiert als lokaler Zeit-Master für die Knoten 3₁, 3₂ und 3₄, da er der einzige Knoten in gemeinsamen ad-hoc-Netzwerk mit der meisten Anzahl von benachbarten Knoten darstellt.

Das Entfernen von Knoten 3₁ aus der Übertragungsreichweite von Knoten 3₂ wird zu den Sendezeitpunkten (2) und (5) der "Hallo-Nachricht" von Knoten 3₂ noch nicht erkannt, so dass diese "Hallo-Nachricht" von Knoten 3₂ Informationen zu allen Nachbarknoten 3₁ und 3₃ des Knotens 3₂ enthält. Äquivalent wird das Entfernen von Knoten 3₁ aus der Übertragungsreichweite von Knoten 3₃ zu den Sendezeitpunkten (3) und (6) der "Hallo-Nachricht" von Knoten 3₃ noch nicht erkannt, so dass die "Hallo-Nachricht" von Knoten 3₃ die Informationen zu allen Nachbarknoten 3₁, 3₂ und 3₄ des Knoten 3₃ enthält. Schließlich wird das Entfernen von Knoten 3₁ aus der Übertragungsreichweite von Knoten 3₄ zu den Sendezeitpunkten (4) und (7) der "Hallo-Nachricht" von Knoten 3₄ noch nicht erkannt, so dass auch die "Hallo-Nachricht" von Knoten 3₄ Information von zwei Nachbarknoten 3₁ und 3₃ des Knotens 3₄ enthält.

Mehr oder weniger gleichzeitig zum Zeitpunkt (8) erkennen die Knoten 3₂, 3₃ und 3₄ aufgrund einer ausbleibenden "Hallo-Nachricht" von Knoten 3₁ das Entfernen von Knoten 3₁ aus ihren jeweiligen Übertragungsreichweiten und somit auch aus dem gesamten ad-hoc-Netzwerk.

Somit enthält die "Hallo-Nachricht" von Knoten 3₂ zum Sendezeitpunkt (9) nur noch Informationen für den verbleibenden Nachbarknoten 3₃. Ebenso enthält die "Hallo-Nachricht" von Knoten 3₃ zum Sendezeitpunkt (10) nur noch Informationen für die verbleibenden Nachbarknoten 3₂ und 3₄. Schließlich enthält die "Hallo-Nachricht" von Knoten 3₄ zum Sendezeitpunkt (13) nur noch Informationen für den verbleibenden Nachbarknoten 3₃. Eine Quittierung der in der "Hallo-Nachricht" von Knoten 3₂ enthaltenen Mitteilung, dass sich Knoten 3₁ aus der Übertragungsreichweite von Knoten 3₂ entfernt hat, durch eine unmittelbar verschickte "I-Hallo-Nachricht" durch Knoten 3₃ unterbleibt, da Knoten 3₃ vergleichsweise zeitnah zum Sendezeitpunkt (10) eine "Hallo-Nachricht" verschickt, aus der hervorgeht, dass Knoten 3₁ sich auch aus der Übertragungsreichweite von Knoten 3₃ entfernt hat. Aus demselben Grund verschickt Knoten 3₄ keine Quittierung der in der "Hallo-Nachricht" von Knoten 3₃ enthaltenen Mitteilung, dass sich Knoten 3₁ aus der Übertragungsreichweite von Knoten 3₃ entfernt hat, mittels einer "I-Hallo-Nachricht".

Knoten 3₃ wird zum lokalen Zeit-Master für die Knoten 3₂ und 3₄ des verbleibenden ad-hoc-Netzwerkes, da er der einzige Knoten im verbleibenden ad-hoc-Netzwerk mit der meisten Anzahl von benachbarten Knoten ist. Somit synchronisiert Knoten 3₂ zum Empfangszeitpunkt (11) der "Hallo-Nachricht" des Knoten 3₃ seine lokale Zeit an die lokale Zeit des als lokalen Zeit-Master agierenden Knoten 3₃, während Knoten 3₄ zum Empfangszeitpunktes (12) der "Hallo-Nachricht" des Knotens 3₃ seine lokale Zeit äquivalent an die lokale Zeit des Knotens 3₃ synchronisiert.

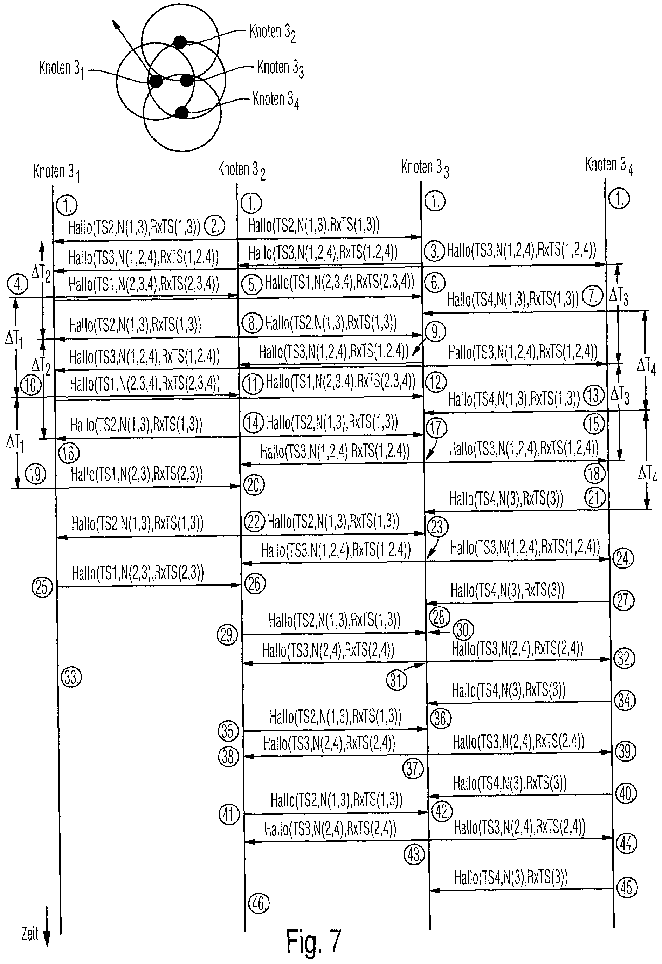

Im sechsten Szenario in Fig. 7 entfernt sich Knoten 3₁ nicht gleichzeitig von allen übrigen Knoten 3₂, 3₃ und 3₄ des verbleibenden ad-hoc-Netzwerks, sondern entfernt sich sukzessive aus der Übertragungsreichweite der einzelnen Knoten 3₄, 3₃ und 3₂.
Die Ursprungskonfiguration des sechsten Szenarios entspricht der Ursprungskonfiguration des fünften Szenarios. Somit fungiert Knoten 3₃ als lokaler Zeit-Master für die Knoten 3₁, 3₂ und 3₄ und die vorhandenen symmetrischen Übertragungsverbindungen zwischen den einzelnen Knoten entsprechen den symmetrischen Übertragungsverbindungen im fünften Szenario. Zum Zeitpunkt (1) entfernt sich Knoten 3₁ aus der Übertragungsreichweite von Knoten 3₄.

Das sukzessive Entfernen von Knoten 3₁ aus dem gemeinsamen ad-hoc-Netzwerk wird von den übrigen Knoten 3₂, 3₃ und 3₄ in den ersten Sendezeitpunkten ihrer "Hallo-Nachrichten" nicht erkannt. Knoten 3₂ verschickt zu den Sendezeitpunkten (2), (8), (14), (22), (29), (35) und (41) jeweils eine "Hallo-Nachricht" mit Informationen über alle seine Nachbarknoten 3₁ und 3₃. Knoten 3₃ verschickt zu den Sendezeitpunkten (3), (9), (17) und (23) jeweils eine "Hallo-Nachricht" mit Informationen über alle seine Nachbarknoten 3₁, 3₂ und 3₃. Knoten 3₄ verschickt zum Sendezeitpunkt (7) und (13) eine "Hallo-Nachricht" mit Informationen über alle seine Nachbarknoten 3₁ und 3₃. Aufgrund des Entfernens von Knoten 3₁ aus Übertragungsreichweite von Knoten 3₄ erreicht die von Knoten 3₁ und Knoten 3₄ jeweils verschickte "Hallo-Nachricht" den Knoten 3₄ bzw. 3₁ nicht.

Knoten 3₂ synchronisiert seine lokale Zeit an die lokale Zeit des Knotens 3₁ zu den Empfangszeitpunkten (5), (11), (20) und (26) der "Hallo-Nachricht" des Knoten 3₁ mit den in dieser "Hallo-Nachricht" enthaltenen Zeitinformationen. Äquivalent synchronisiert Knoten 3₃ seine lokale Zeit an die lokale Zeit des Knoten 3₁ zum Empfangszeitpunkt (6) und (12) der "Hallo-Nachricht" des Knoten 3₁ mit den in dieser "Hallo-Nachricht" enthaltenen Zeitinformationen. Zum Zeitpunkt (15) erkennt Knoten 3₄ das Entfernen von Knoten 3₁ aus seiner Übertragungsreichweite, da er jüngst innerhalb eines festgelegten Zeitintervalls keine "Hallo-Nachricht" des Knotens 3₁ empfangen hat und versendet zu den nächsten Sendezeitpunkten (21), (27), (34), (40) und (45) eine "Hallo-Nachricht", die lediglich Informationen zu seinem verbleibenden Nachbarknoten 3₃ enthält. Für die Synchronisierung seiner lokalen Zeit wählt er den in seiner Übertragungsreichweite positionierten Knoten 3₃ zu seinem lokalen Zeit-Master und synchronisiert seine lokale Zeit an die lokale Zeit des als lokalen Zeit-Master agierenden Knoten 3₃ zu den Empfangszeitpunkten (18), (24), (32), (39) und (44) einer "Hallo-Nachricht" des Knoten 3₃. Zum Zeitpunkt (16) entfernt sich Knoten 3₁ auch aus der Übertragungsreichweite von Knoten 3₃.

Zum Sendezeitpunkt (19) einer zyklisch zu verschickenden "Hallo-Nachricht" erkennt Knoten 3₁, dass er von Knoten 3₄ innerhalb eines bestimmten Zeitintervalls seit dem letzten Empfang einer "Hallo-Nachricht" keine "Hallo-Nachricht" von Knoten 3₄ empfangen hat und sich somit aus der Übertragungsreichweite von Knoten 3₄ entfernt hat. Somit verschickt Knoten 3₁ zum Sendezeitpunkt (19) eine "Hallo-Nachricht", die lediglich Informationen zu den noch verbleibenden Nachbarknoten 3₂ und 3₃ enthält und lediglich den Knoten 3₂ erreicht.

Diese "Hallo-Nachricht" des Knotens 3₁ empfängt einzig Knoten 3₂ zum Empfangszeitpunkt (20) und erkennt anhand dieser "Hallo-Nachricht", dass sich Knoten 3₁ aus der Übertragungsreichweite von Knoten 3₄ entfernt hat, synchronisiert aber zu diesem Zeitpunkt (20) seine lokale Zeit weiterhin auf die lokale Zeit seines als lokalen Zeit-Master agierenden Knotens 3₁.

Zum Zeitpunkt (28) erkennt Knoten 3₃, dass Knoten 3₁ sich aus seiner Übertragungsreichweite entfernt hat, da er jüngst innerhalb eines festgelegten Zeitintervalls keine "Hallo-Nachricht" des Knoten 3₁ empfangen hat (insbesondere die "Hallo-Nachrichten" des Knoten 3₁, die Knoten 3₂ zum Empfangszeitpunkt (20) und (26) empfangen hat) und versendet zu den nächsten Sendezeitpunkten (31), (37) und (43) eine "Hallo-Nachricht", die lediglich Informationen zu den noch verbleibenden Nachbarknoten 3₂ und 3₄ enthält. Knoten 3₃ legt zur Synchronisierung seiner lokalen Zeit Knoten 3₂ zu seinem lokalen Zeit-Master fest, da Knoten 3₂ die niedrigste MAC-Adresse von allen im verbleibenden ad-hoc-Netzwerk verbleibenden Knoten 3₂, 3₃ und 3₄ aufweist. Zu den nächsten Empfangszeitpunkten (30), (36) und (42) einer "Hallo-Nachricht" des Knoten 3₂ synchronisiert somit Knoten 3₃ seine lokale Zeit an die lokale Zeit des als lokalen Zeit-Master agierenden Knotens 3₂.

Zum Zeitpunkt (33) entfernt sich Knoten 31 schließlich auch aus der Übertragungsreichweite des Knotens 3₂. Das Entfernen von Knoten 3₁ aus der Übertragungsreichweite des Knotens 3₂ wird von Knoten 3₂ zum Zeitpunkt (46) erkannt. Knoten 3₂ bleibt lokaler Zeit-Master des Knotens 3₃ und des Knotens 3₄ des verbleibenden ad-hoc-Netzwerkes und muss deshalb seine lokale Zeit nicht an die lokale Zeit eines anderen Knotens synchronisieren.

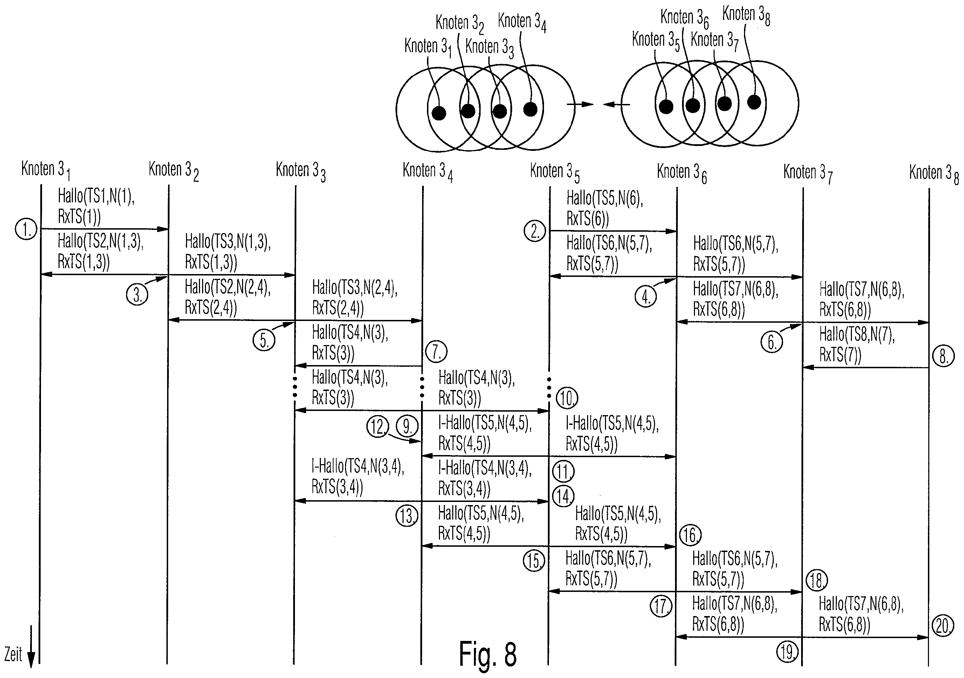

Im siebten Szenario der Fig. 8 vereinigen sich zwei Teil-ad-hoc-Netzwerke bestehend aus den Knoten 3₁, 3₂, 3₃ und 3₄ einerseits und den Knoten 3₅, 3₆, 3₇ und 3₈ andererseits zu einem einzigen Gesamt-ad-hoc-Netzwerk.

In der Ursprungskonfiguration bildet Knoten 3₁ mit Knoten 3₂ eine symmetrische Übertragungsverbindung, während Knoten 3₂ zusätzlich eine symmetrische Übertragungsverbindung mit Knoten 3₃ bildet, der wiederum eine symmetrische Übertragungsverbindung mit Knoten 3₄ bildet. Knoten 3₁ dient als lokaler Zeit-Master für Knoten 3₂, während Knoten 3₃ als lokaler Zeit-Master für Knoten 3₂ und Knoten 3₄ als lokaler Zeit-Master von Knoten 3₃ agiert. Äquivalent bildet Knoten 3₅ mit Knoten 3₆ eine symmetrische Übertragungsverbindung, während Knoten 3₆ zusätzlich eine symmetrische Übertragungsverbindung mit Knoten 3₇ bildet, der wiederum eine symmetrische Übertragungsverbindung mit Knoten 3₈ bildet. Knoten 3₅ dient als lokaler Zeit-Master für Knoten 3₆, während Knoten 3₇ als lokaler Zeit-Master für Knoten 3₆ und Knoten 3₈ als lokaler Zeit-Master von Knoten 3₇ agiert.

Die einzelnen Knoten i senden innerhalb ihres jeweiligen zyklischen Zeitrasters Δ*Tᵢ* jeweils eine "Hallo-Nachricht" an ihre jeweiligen Nachbar-Knoten. Knoten 3₁ sendet zum Zeitpunkt (1) eine "Hallo-Nachricht" mit Informationen über seinen identifizierten Nachbarknoten 3₂. Knoten 3₅ sendet zum Zeitpunkt (2) eine "Hallo-Nachricht" mit Informationen über seinen identifizierten Nachbarknoten 3₆. Knoten 3₂ sendet zum Zeitpunkt (3) eine "Hallo-Nachricht" mit Informationen über seine identifizierten Nachbarknoten 3₁ und 3₃. Knoten 3₆ sendet zum Zeitpunkt (4) eine "Hallo-Nachricht" mit Informationen über seine identifizierten Nachbarknoten 3₅ und 3₇. Knoten 3₃ sendet zum Zeitpunkt (5) eine "Hallo-Nachricht" mit Informationen über seine identifizierten Nachbarknoten 3₂ und 3₄. Knoten 3₇ sendet zum Zeitpunkt (7) eine "Hallo-Nachricht" mit Informationen über seine identifizierten Nachbarknoten 3₆ und 3₈. Knoten 3₄ sendet zum Zeitpunkt (4) eine "Hallo-Nachricht" mit Informationen über seinem identifizierten Nachbarknoten 3₃. Knoten 3₈ sendet zum Zeitpunkt (8) eine "Hallo-Nachricht" mit Informationen über seinen identifizierten Nachbarknoten 3₇.

Zu einem späteren Zeitpunkt (9) sendet Knoten 3₄ wiederum eine "Hallo-Nachricht" mit Informationen N(3) über seinen identifizierten Nachbarknoten 3₃, die nicht nur vom Nachbarknoten 3₃, sondern auch im Zeitpunkt (10) vom Knoten 3₅ des jeweils anderen Teil-ad-hoc-Netzwerkes empfangen wird, der sich in Übertragungsreichweite zum Knoten 3₄ befindet. Da Knoten 3₄ für Knoten 3₅ im ersten Moment ein fremder Knoten ist, quittierte er den Empfang der "Hallo-Nachricht" von Knoten 3₄ mit einer "I-Hallo-Nachricht" zum Zeitpunkt (11) mit Informationen (N4,6) über seine identifizierten Nachbarknoten 3₄ und 3₆, die von Knoten 3₄ zum Zeitpunkt (12) empfangen wird. Da auch Knoten 3₅ für Knoten 3₄ im ersten Moment ein fremder Knoten ist, wird Knoten 3₄ unmittelbar nach Empfang der "I-Hallo-Nachricht" des Knotens 3₅ zum Zeitpunkt (13) eine "I-Hallo-Nachricht" mit Informationen N(3,5) über seine identifizierten Nachbarknoten 3₃ und 3₅ versenden.

Da einer der Knoten 3₁, 3₂, 3₃ und 3₄ des in Fig. 8 linksseitig dargestellten ad-hoc-Netzwerkes die niedrigste MAC-Adresse von allen zukünftig in einem einzigen ad-hoc-Netzwerk zu integrierenden Knoten 3₁, 3₂, 3₃, 3₄, 3₅, 3₆, 3₇ und 3₈ aufweist, wird Knoten 3₄ nicht nur von Knoten 3₃ des in Fig. 8 linksseitig dargestellten ad-hoc-Netzwerkes, sondern auch von Knoten 3₅ des in Fig. 8 rechtsseitig dargestellten ad-hoc-Netzwerkes zum lokalen Zeit-Master festgelegt. Zum Empfangszeitpunkt (14) der "I-Hallo-Nachricht" des Knotens 3₄ beim Knoten 3₅ liegt eine symmetrische Übertragungsverbindung zwischen Knoten 3₄ und Knoten 3₅ vor, da beide Knoten 3₄ und 3₅ jeweils zu diesem Zeitpunkt (14) erkannt haben, dass eine korrekte Übertragung von Knoten 3₄ nach Knoten 3₅ und von Knoten 3₅ nach Knoten 3₄ existiert. Zum Empfangszeitpunkt (14) der "I-Hallo-Nachricht" des Knotens 3₄ beim Knoten 3₅ synchronisiert Knoten 3₅ seine lokale Zeit an die lokale Zeit des als lokaler Zeit-Master agierenden Knoten 3₄ aus den in der "I-Hallo-Nachricht" übertragenen Zeitinformationen.

Mit den Zeitinformationen der von Knoten 3₅ zum Zeitpunkt (15) gesendeten "Hallo-Nachricht", die Knoten 3₆ zum Zeitpunkt (16) empfängt, synchronisiert Knoten 3₆ seine lokale Zeit an die lokale Zeit seines als lokalen Zeit-Master agierenden Knotens 3₅. Äquivalent synchronisiert Knoten 3₇ seine lokale Zeit an die lokale Zeit seines als lokalen Zeit-Master agierenden Knoten 3₆ mit den Zeitinformationen der von Knoten 3₆ zum Zeitpunkt (17) gesendeten "Hallo-Nachricht", die Knoten 3₇ zum Zeitpunkt (18) empfängt. Auch Knoten 3₈ synchronisiert seine lokale Zeit an die lokale Zeit seines als lokalen Zeit-Master agierenden Knotens 3₇ mit den Zeitinformationen der von Knoten 3₇ zum Zeitpunkt (19) gesendeten "Hallo-Nachricht", die Knoten 3₈ zum Zeitpunkt (20) empfängt.

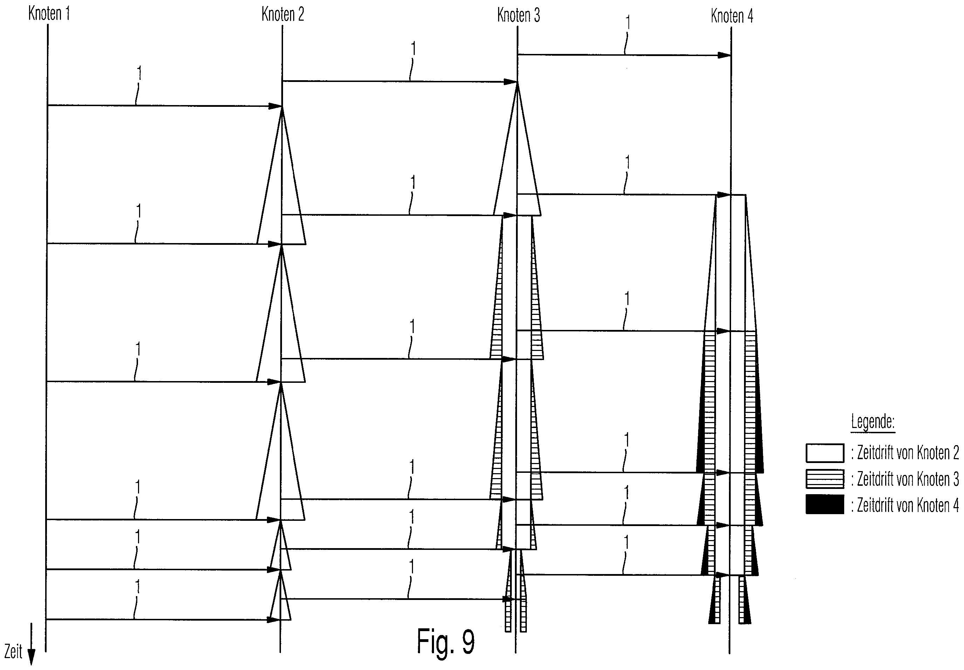

Abschließend sei erwähnt, dass die lokale Zeit jedes Knotens innerhalb oder außerhalb eines ad-hoc-Netzwerkes aufgrund einer Taktdrift des in jedem Knoten für die Generierung der lokalen Zeit implementierten Taktgenerators eine gewisse Zeitungenauigkeit aufweist. Der Verlauf der Zeitungenauigkeit der in einem Knoten realisierten lokalen Zeit ist aus Fig. 9 für jeweils vier Knoten zu erkennen. Diese vier Knoten synchronisieren jeweils ihre lokale Zeit seriell an einen als lokalen Zeit-Master agierenden Nachbarknoten. Knoten 2 synchronisiert seine lokale Zeit an die lokale Zeit von Knoten 1; Knoten 3 synchronisiert seine lokale Zeit an die lokale Zeit von Knoten 2 usw. Ab dem Synchronisierungszeitpunkt, in dem die Zeitungenauigkeit der jeweiligen lokalen Zeit minimal ist, steigt die Zeitungenauigkeit der jeweiligen lokalen Zeit linear an, bis sie wieder synchronisiert wird.

Durch Reduzierung des Synchronisierungsintervalls mittels Reduzierung des zyklischen Zeitrasters, in dem vom jeweiligen als lokalen Zeit-Master agierenden Knoten jeweils eine "Hallo-Nachricht" gesendet wird, kann eine Minimierung der Zeitungenauigkeit einer in einem Knoten realisierten lokalen Zeit verwirklicht werden, wie aus Fig. 9 hervorgeht. Bevorzugt wird vom jeweiligen lokalen Zeit-Master der Zeitpunkt vorab berechnet, in der eine "Hallo-Nachricht" zur Zeitsynchronisierung verschickt wird, um eine maximal erlaubte Zeitungenauigkeit beim zu synchronisierenden Knoten einzuhalten.

Die Erfindung ist nicht auf die dargestellte Ausführungsform und die dargestellten Szenarien beschränkt. Von der Erfindung sind sämtliche Kombinationen aller in den Patentansprüchen beanspruchten Merkmale, aller in der Beschreibung offenbarten Merkmale und aller in den Figuren der Zeichnung dargestellten Merkmale abgedeckt.

## Patentansprüche

1. Verfahren zur Zeitsynchronisierung in einem mobilen ad-hoc-Netzwerk mit folgenden Verfahrensschritten:
• Versenden einer Nachricht zur Signalisierung einer Anwesenheit (1) durch jeden Knoten (3₁,3₂,3₃,3₄,3₅,3₆,3₇,3₈) des mobilen ad-hoc-Netzwerkes in jeweils einem bestimmten Zeitraster,
• Quittieren der empfangenen Nachricht zur Signalisierung einer Anwesenheit (1) durch jeden in Übertragungsreichweite des versendenden Knoten (3₁,3₂,3₃,3₄,3₅,3₆,3₇,3₈) befindlichen Knoten (3₁,3₂,3₃,3₄,3₅,3₆,3₇,3₈) mit jeweils einer Quittierungs-Nachricht (2),
• Festlegen desjenigen Knotens (3₁,3₂,3₃,3₄,3₅,3₆,3₇,3₈) aus zwei zueinander in Übertragungsreichweite befindlichen Knoten (3₁,3₂,3₃,3₄,3₅,3₆,3₇,3₈), an dessen lokaler Zeit der jeweils andere Knoten (3₁,3₂,3₃,3₄,3₅,3₆,3₇,3₈) seine lokale Zeit synchronisiert, anhand von Informationen einer Quittierungs-Nachricht (2), die einer der beiden Knoten (3₁,3₂,3₃,3₄,3₅,3₆,3₇,3₈) empfängt, und
• Synchronisieren der lokalen Zeit der Knoten (3₁,3₂,3₃,3₄,3₅,3₆,3₇,3₈) auf die lokale Zeit des jeweiligen festgelegten Knotens (3₁,3₂,3₃,3₄,3₅,3₆,3₇,3₈),
**dadurch gekennzeichnet,**
**dass** derjenige Knoten (3₁,3₂,3₃,3₄,3₅,3₆,3₇,3₈) der beiden zueinander in Übertragungsreichweite befindlichen Knoten (3₁,3₂,3₃,3₄,3₅,3₆,3₇,3₈) festgelegt wird, dessen lokale Zeit die höchste Zeitgenauigkeit aufweist oder der in einem anderen ad-hoc-Netzwerk mit einem Knoten (3₁,3₂,3₃,3₄,3₅, 3₆,3₇,3₈) eingebunden ist, dessen lokale Zeit die höchste Zeitgenauigkeit aufweist.

2. Verfahren nach Anspruch 1,
**dadurch gekennzeichnet,**
**dass** bei einem sich einzig aus zwei Knoten (3₁,3₂) bildenden ad-hoc-Netzwerk, deren lokale Zeiten eine identische Zeitgenauigkeit aufweisen, derjenige Knoten (3₁,3₂) festgelegt wird, der zuerst auf eine Nachricht zur Signalisierung einer Anwesenheit (1) der beiden Knoten (3₁,3₂) eine Quittierungs-Nachricht (2) sendet.

3. Verfahren nach einem der Ansprüche 1 bis 2,
**dadurch gekennzeichnet,**
**dass** bei einer identischen Zeitgenauigkeit aller in das zu bildende ad-hoc-Netzwerk eingebundenen Knoten (3₁,3₂,3₃,3₄, 3₅,3₆,3₇,3₈) derjenige Knoten der beiden zueinander in Übertragungsreichweite befindlichen Knoten (3₁,3₂,3₃,3₄,3₅, 3₆,3₇,3₈) festgelegt wird, der mit einer größeren Anzahl von Knoten (3₁,3₂,3₃,3₄,3₅,3₆,3₇,3₈) bisher ein ad-hoc-Netzwerk bildet.

4. Verfahren nach einem der Ansprüche 1 bis 3,
**dadurch gekennzeichnet,**
**dass** bei einer identischen Zeitgenauigkeit aller in das zu bildende ad-hoc-Netzwerk eingebundenen Knoten (3₁,3₂,3₃, 3₄,3₅,3₆,3₇,3₈) und bei einer identischen Anzahl von Knoten (3₁,3₂,3₃,3₄,3₅,3₆,3₇,3₈), mit denen die beiden zueinander in Übertragungsreichweite befindlichen Knoten jeweils ein ad-hoc-Netzwerk bilden, derjenige Knoten (3₁,3₂,3₃,3₄,3₅, 3₆,3₇,3₈) festgelegt wird, dessen ad-hoc-Netzwerk eine niedrigere Identität-Kennung aufweist.

5. Verfahren nach Anspruch 4,
**dadurch gekennzeichnet,**
**dass** die Identitäts-Kennung des ad-hoc-Netzwerkes die Medium-Zugriffs-Kontroll-Adresse des ad-hoc-Netzwerkes ist.

6. Verfahren nach einem der Ansprüche 1 bis 5,
**dadurch gekennzeichnet,**
**dass** bei einem ad-hoc-Netzwerk, aus dem sich mindestens ein Knoten (3₁) entfernt, derjenige Knoten (3₂,3₃,3₄) des übrigen ad-hoc-Netzwerkes festgelegt wird, an dessen lokaler Zeit die übrigen Knoten (3₂,3₃,3₄) des ad-hoc-Netzwerke jeweils ihre lokale Zeit synchronisieren, der die lokale Zeit mit der höchsten Zeitgenauigkeit aufweist.

7. Verfahren zur Zeitsynchronisierung nach Anspruch 6,
**dadurch gekennzeichnet,**
**dass** bei einem ad-hoc-Netzwerk, aus dem sich mindestens ein Knoten (3₁) entfernt, und bei identischer Zeitgenauigkeit der lokalen Zeiten der Knoten (3₂,3₃,3₄) des übrigen ad-hoc-Netzwerkes derjenige Knoten (3₂,3₃,3₄) des übrigen ad-hoc-Netzwerkes festgelegt wird, der die höchste Anzahl von direkt benachbarten Knoten (3₂,3₃,3₄) aufweist.

8. Verfahren nach Anspruch 6 oder 7,
**dadurch gekennzeichnet,**
**dass** bei einem ad-hoc-Netzwerk, aus dem sich mindestens ein Knoten (3₁) entfernt, und bei identischer Zeitgenauigkeit der lokalen Zeiten der Knoten (3₂,3₃,3₄) des übrigen ad-hoc-Netzwerkes und bei einer identischen Anzahl von jeweils direkt benachbarten Knoten (3₂,3₃,3₄) bei jedem Knoten (3₂,3₃,3₄) des übrigen ad-hoc-Netzwerkes derjenige Knoten (3₂,3₃,3₄) des übrigen ad-hoc-Netzwerkes festgelegt wird, der die niedrigste Identität-Kennung aufweist.

9. Verfahren nach einem der Ansprüche 1 bis 5,
**dadurch gekennzeichnet,**
**dass** ein Knoten (3₁,3₂,3₃,3₄,3₅,3₆,3₇,3₈) eines ad-hoc-Netzwerkes, von dem sich ein Knoten (3₁,3₂,3₃,3₄,3₅,3₆, 3₇,3₈) entfernt, an dessen lokaler Zeit der Knoten (3₁,3₂, 3₃,3₄,3₅,3₆,3₇,3₈) des ad-hoc-Netzwerkes bisher seine lokale Zeit synchronisierte, einen anderen in seiner Übertragungsreichweite befindlichen Knoten (3₁,3₂,3₃,3₄,3₅, 3₆,3₇,3₈) des übrigen ad-hoc-Netzwerkes festlegt, an dessen lokaler Zeit er seine lokale Zeit synchronisiert.

10. Verfahren nach einem der Ansprüche 1 bis 9,
**dadurch gekennzeichnet,**
**dass** das Synchronisieren der lokalen Zeit der Knoten (3₁,3₂,3₃,3₄,3₅,3₆,3₇,3₈), die jeweils mit einem der beiden zueinander in Übertragungsreichweite befindlichen Knoten (3₁,3₂,3₃,3₄,3₅,3₆,3₇,3₈) ein ad-hoc-Netzwerk bilden, an die lokale Zeit des festgelegten Knotens (3₁,3₂,3₃,3₄,3₅,3₆, 3₇,3₈) dadurch realisiert wird, dass jeder Knoten (3₁,3₂, 3₃,3₄,3₅,3₆,3₇,3₈) des jeweiligen ad-hoc-Netzwerkes einen direkt benachbarten Knoten (3₁,3₂,3₃,3₄,3₅,3₆,3₇,3₈) des ad-hoc-Netzwerkes als Knoten (3₁,3₂,3₃,3₄,3₅,3₆,3₇,3₈) festlegt, an dessen lokaler Zeit er seine lokale Zeit synchronisiert.

11. Verfahren nach einem der Ansprüche 1 bis 10,
**dadurch gekennzeichnet,**
**dass** das Synchronisieren der lokalen Zeit eines Knoten (3₁,3₂,3₃,3₄,3₅,3₆,3₇,3₈) an die lokale Zeit des festgelegten Knoten (3₁,3₂,3₃,3₄,3₅,3₆,3₇,3₈) dadurch erfolgt, dass der festgelegte Knoten (3₁,3₂,3₃,3₄,3₅,3₆, 3₇,3₈) dem Knoten den Empfangszeitpunkt der vom Knoten (3₁,3₂,3₃,3₄,3₅,3₆,3₇,3₈) gesendeten Nachricht zur Aktualisierung einer Anwesenheit (1) oder Quittierungs-Nachricht (2) in der lokalen Zeit des festgelegten Knotens (3₁,3₂,3₃,3₄,3₅,3₆,3₇,3₈) und den Sendezeitpunkt einer an den Knoten (3₁,3₂,3₃,3₄,3₅,3₆,3₇,3₈) gesendeten Nachricht zur Signalisierung einer Anwesenheit (1) oder Quittierungs-Nachricht (2) mitteilt.

12. Verfahren nach Anspruch 11,
**dadurch gekennzeichnet,**
**dass** das Synchronisieren der lokalen Zeit eines Knoten (3₁,3₂,3₃,3₄,3₅,3₆,3₇,3₈) an die lokale Zeit des festgelegten Knoten (3₁,3₂,3₃,3₄,3₅,3₆,3₇,3₈) bei jedem Empfang einer Nachricht zur Signalisierung einer Anwesenheit (1) oder einer Quittierungs-Nachricht (2) des festgelegten Knotens (3₁,3₂,3₃,3₄,3₅,3₆,3₇,3₈) erfolgt.

13. Verfahren nach einem der Ansprüche 6 bis 8,
**dadurch gekennzeichnet,**
**dass** das Entfernen eines Knotens (3₁,3₂,3₃,3₄,3₅,3₆,3₇,3₈) aus einem ad-hoc-Netzwerk erkannt wird, falls seit dem letzten Empfangszeitpunkt einer Nachricht zur Signalisierung einer Anwesenheit (1) des sich entfernenden Knotens (3₁,3₂,3₃,3₄,3₅,3₆,3₇,3₈) innerhalb eines konstanten Zeitrasters, in denen jeweils eine Nachricht zur Signalisierung einer Anwesenheit (1) übertragen wird, keine weitere Nachricht zur Signalisierung einer Anwesenheit (1) des sich entfernenden Knotens (3₁,3₂,3₃, 3₄,3₅,3₆,3₇,3₈) von allen übrigen Knoten (3₁,3₂,3₃,3₄,3₅, 3₆,3₇,3₈) des verbleibenden ad-hoc-Netzwerkes empfangen wird.

14. Verfahren nach einem der Ansprüche 1 bis 13,
**dadurch gekennzeichnet,**
**dass** zur Reduzierung des Einflusses einer Taktdrift auf die Zeitgenauigkeit der lokalen Zeit eines Knotens (3₁,3₂,3₃,3₄,3₅,3₆,3₇,3₈) ein konstantes Zeitraster, in dem der Knoten (3₁,3₂,3₃,3₄,3₅,3₆,3₇,3₈) eine Nachricht zur Aktualisierung einer Anwesenheit (1) sendet, minimiert wird.

15. Verfahren nach Anspruch 14,
**dadurch gekennzeichnet,**
**dass** der Knoten (3₁,3₂,3₃,3₄,3₅,3₆,3₇,3₈) den Sendezeitpunkt der Nachricht zur Aktualisierung einer Anwesenheit (1) vorausberechnet, um den Einfluss der Taktdrift auf die Zeitgenauigkeit der lokalen Zeit des Knotens (3₁,3₂,3₃,3₄, 3₅,3₆,3₇,3₈) zu begrenzen.

16. System zur Zeitsynchronisierung in einem mobilen ad-hoc-Netzwerk bestehend aus mehreren, jeweils eine Nachricht zur Signalisierung einer Anwesenheit (1) in jeweils einem bestimmten Zeitraster versendenden Knoten (3₁,3₂,3₃,3₄,3₅,3₆,3₇,3₈), wobei durch jeden in Übertragungsreichweite des eine Nachricht zur Signalisierung einer Anwesenheit (1) versendenden Knotens (3₁,3₂,3₃,3₄,3₅,3₆,3₇,3₈) befindlichen Knoten (3₁,3₂,3₃,3₄,3₅,3₆,3₇,3₈) eine Quittierung der Nachricht zur Signalisierung einer Anwesenheit (1) mittels einer Quittierungs-Nachricht (2) erfolgt, wobei von jeweils zwei zueinander in Übertragungsreichweite befindlichen Knoten (3₁,3₂,3₃,3₄,3₅,3₆,3₇,3₈) ein Knoten (3₁,3₂,3₃,3₄,3₅,3₆,3₇,3₈) festgelegt ist, an dessen lokaler Zeit die lokale Zeit des jeweils anderen Knoten (3₁,3₂,3₃,3₄,3₅,3₆,3₇,3₈) synchronisiert ist, wobei die Festlegung des Knotens (3₁,3₂,3₃,3₄,3₅,3₆,3₇,3₈) anhand von Informationen der von einem der beiden zueinander in Übertragungsreichweite befindlichen Knoten (3₁,3₂,3₃,3₄,3₅,3₆,3₇,3₈) empfangenen Quittierungs-Nachricht (2) erfolgt,
**dadurch gekennzeichnet,**
**dass** das System denjenigen Knoten (3₁,3₂,3₃,3₄,3₅,3₆,3₇,3₈) der beiden zueinander in Übertragungsreichweite befindlichen Knoten (3₁,3₂,3₃,3₄,3₅,3₆,3₇,3₈) festlegt, dessen lokale Zeit die höchste Zeitgenauigkeit aufweist oder der in einem anderen ad-hoc-Netzwerk mit einem Knoten (3₁,3₂,3₃,3₄,3₅,3₆,3₇,3₈) eingebunden ist, dessen lokale Zeit die höchste Zeitgenauigkeit aufweist.

## Claims

1. Method for time synchronisation in an ad hoc mobile network with the following method steps:
- transmission of a message to signal a presence (1) by each node (3₁, 3₂, 3₃, 3₄, 3₅, 3₆, 3₇, 3₈) of the ad hoc mobile network in a particular time frame in each case,
- acknowledgement of the message received to signal a presence (1) by each node (3₁, 3₂, 3₃, 3₄, 3₅, 3₆, 3₇, 3₈) within transmission range of the transmitting node (3₁, 3₂, 3₃, 3₄, 3₅, 3₆, 3₇, 3₈) with an acknowledgement message (2) in each case,
- specification of that node (3₁, 3₂, 3₃, 3₄, 3₅, 3₆, 3₇, 3₈) of two nodes (3₁, 3₂, 3₃, 3₄, 3₅, 3₆, 3₇, 3₈) within transmission range of one other with whose local time the respective other node (3₁, 3₂, 3₃, 3₄, 3₅, 3₆, 3₇, 3₈) synchronises its local time, with reference to information of an acknowledgement message (2) which one of the two nodes (3₁, 3₂, 3₃, 3₄, 3₅, 3₆, 3₇, 3₈) receives, and
- synchronisation of the local time of the nodes (3₁, 3₂, 3₃, 3₄, 3₅, 3₆, 3₇, 3₈) with the local time of the respective specified node (3₁, 3₂, 3₃, 3₄, 3₅, 3₆, 3₇, 3₈), **characterised in that**
that node (3₁, 3₂, 3₃, 3₄, 3₅, 3₆, 3₇, 3₈) of the two nodes (3₁, 3₂, 3₃, 3₄, 3₅, 3₆, 3₇, 3₈) within transmission range of one another whose local time has the highest time accuracy or which is linked into another ad hoc network with a node (3₁, 3₂, 3₃, 3₄, 3₅, 3₆, 3₇, 3₈) whose local time has the highest time accuracy is specified.

2. Method according to claim 1,
**characterised in that**
in the case of an ad hoc network being formed of just two nodes (3₁, 3₂) whose local times have an identical time accuracy, that node (3₁, 3₂) which first transmits an acknowledgement message (2) in response to a message to signal a presence (1) of the two nodes (3₁, 3₂) is specified.

3. Method according to one of claims 1 to 2,
**characterised in that**
if all the nodes (3₁, 3₂, 3₃, 3₄, 3₅, 3₆, 3₇, 3₈) linked into the ad hoc network being formed have an identical time accuracy, that node of the two nodes (3₁, 3₂, 3₃, 3₄, 3₅, 3₆, 3₇, 3₈) within transmission range of one another which has so far formed an ad hoc network with a larger number of nodes (3₁, 3₂, 3₃, 3₄, 3₅, 3₆, 3₇, 3₈) is specified.

4. Method according to one of claims 1 to 3,
**characterised in that**
if all the nodes (3₁, 3₂, 3₃, 3₄, 3₅, 3₆, 3₇, 3₈) linked into the ad hoc network being formed have an identical time accuracy and if the number of nodes (3₁, 3₂, 3₃, 3₄, 3₅, 3₆, 3₇, 3₈) with which the two nodes within transmission range of one another each form an ad hoc network is identical, that node (3₁, 3₂, 3₃, 3₄, 3₅, 3₆, 3₇, 3₈) whose ad hoc network has a lower identity code or identifier is specified.

5. Method according to claim 4,
**characterised in that**
the identity code or identifier of the ad hoc network is the medium access control address of the ad hoc network.

6. Method according to one of claims 1 to 5,
**characterised in that**
in the case of an ad hoc network from which at least one node (3₁) is removed, that node (3₂, 3₃, 3₄) of the remainder of the ad hoc network with whose local time the remaining nodes (3₂, 3₃, 3₄) of the ad hoc network synchronise their local time in each case which has the local time with the highest time accuracy is specified.

7. Method for time synchronisation according to claim 6,
**characterised in that**
in the case of an ad hoc network from which at least one node (3₁) is removed, and if the nodes (3₂, 3₃, 3₄) of the remainder of the ad hoc network have local times with identical time accuracy, that node (3₂, 3₃, 3₄) of the remainder of the ad hoc network which has the highest number of directly adjacent nodes (3₂, 3₃, 3₄) is specified.

8. Method according to claim 6 or 7,
**characterised in that**
in the case of an ad hoc network from which at least one mode (3₁) is removed, and if the nodes (3₂, 3₃, 3₄) of the remainder of the ad hoc network have local times with identical time accuracy and if each node (3₂, 3₃, 3₄) of the remainder of the ad hoc network has an identical number of directly adjacent nodes (3₂, 3₃, 3₄), that node (3₂, 3₃, 3₄) of the remainder of the ad hoc network which has the lowest identity code or identifier is specified.

9. Method according to one of claims 1 to 5,
**characterised in that**
a node (3₁, 3₂, 3₃, 3₄, 3₅, 3₆, 3₇, 3₈) of an ad hoc network from which a node (3₁, 3₂, 3₃, 3₄, 3₅, 3₆, 3₇, 3₈) is removed with whose local time the node (3₁, 3₂, 3₃, 3₄, 3₅, 3₆, 3₇, 3₈) of the ad hoc network has synchronised its local time so far specifies another node (3₁, 3₂, 3₃, 3₄, 3₅, 3₆, 3₇, 3₈) of the remainder of the ad hoc network within its transmission range with whose local time it synchronises its local time.

10. Method according to one of claims 1 to 9,
**characterised in that**
the synchronisation of the local time of the nodes (3₁, 3₂, 3₃, 3₄, 3₅, 3₆, 3₇, 3₈) which in each case form an ad hoc network with one of the two nodes (3₁, 3₂, 3₃, 3₄, 3₅, 3₆, 3₇, 3₈) within transmission range of one another with the local time of the specified node (3₁, 3₂, 3₃, 3₄, 3₅, 3₆, 3₇, 3₈) is effected **in that** each node (3₁, 3₂, 3₃, 3₄, 3₅, 3₆, 3₇, 3₈) of the respective ad hoc network specifies a directly adjacent node (3₁, 3₂, 3₃, 3₄, 3₅, 3₆, 3₇, 3₈) of the ad hoc network as the node (3₁, 3₂, 3₃, 3₄, 3₅, 3₆, 3₇, 3₈) with whose local time it synchronises its local time.

11. Method according to one of claims 1 to 10,
**characterised in that**
the synchronisation of the local time of a node (3₁, 3₂, 3₃, 3₄, 3₅, 3₆, 3₇, 3₈) with the local time of the specified node (3₁, 3₂, 3₃, 3₄, 3₅, 3₆, 3₇, 3₈) is effected in that the specified node (3₁, 3₂, 3₃, 3₄, 3₅, 3₆, 3₇, 3₈) informs the node of the time of reception of the message transmitted by the node (3₁, 3₂, 3₃, 3₄, 3₅, 3₆, 3₇, 3₈) to update a presence (1) or acknowledgement message (2) in the local time of the specified node (3₁, 3₂, 3₃, 3₄, 3₅, 3₆, 3₇, 3₈) and the time of transmission of a message transmitted to the node (3₁, 3₂, 3₃, 3₄, 3₅, 3₆, 3₇, 3₈) to signal a presence (1) or acknowledgement message (2).

12. Method according to claim 11,
**characterised in that**
the synchronisation of the local time of a node (3₁, 3₂, 3₃, 3₄, 3₅, 3₆, 3₇, 3₈) with the local time of the specified node (3₁, 3₂, 3₃, 3₄, 3₅, 3₆, 3₇, 3₈) is effected every time a message to signal a presence (1) or an acknowledgment message (2) of the specified node (3₁, 3₂, 3₃, 3₄, 3₅, 3₆, 3₇, 3₈) is received.

13. Method according to one of claims 6 to 8,
**characterised in that**
the removal of a node (3₁, 3₂, 3₃, 3₄, 3₅, 3₆, 3₇, 3₈) from an ad hoc network is recognised if no further message to signal a presence (1) of the node (3₁, 3₂, 3₃, 3₄, 3₅, 3₆, 3₇, 3₈) being removed is received by all the remaining nodes (3₁, 3₂, 3₃, 3₄, 3₅, 3₆, 3₇, 3₈) of the remainder of the ad hoc network after the last time of reception of a message to signal a presence (1) of the node (3₁, 3₂, 3₃, 3₄, 3₅, 3₆, 3₇, 3₈) being removed within a constant time frame in which a message to signal a presence (1) is transmitted in each case.

14. Method according to one of claims 1 to 13,
**characterised in that**
to reduce the effect of clock pulse drift on the time accuracy of the local time of a node (3₁, 3₂, 3₃, 3₄, 3₅, 3₆, 3₇, 3₈), a constant time frame in which the node (3₁, 3₂, 3₃, 3₄, 3₅, 3₆, 3₇, 3₈) transmits a message to update a presence (1) is minimised.

15. Method according to claim 14,
**characterised in that**
the node (3₁, 3₂, 3₃, 3₄, 3₅, 3₆, 3₇, 3₈) calculates in advance the time of transmission of the message to update a presence (1) in order to limit the effect of the clock pulse drift on the time accuracy of the local time of the node (3₁, 3₂, 3₃, 3₄, 3₅, 3₆, 3₇, 3₈).

16. System for time synchronisation in an ad hoc mobile network consisting of a plurality of nodes (3₁, 3₂, 3₃, 3₄, 3₅, 3₆, 3₇, 3₈) each transmitting a message to signal a presence (1) in a particular time frame in each case, wherein the message to signal a presence (1) is acknowledged by means of an acknowledgement message (2) by each node (3₁, 3₂, 3₃, 3₄, 3₅, 3₆, 3₇, 3₈) within the transmission range of the node (3₁, 3₂, 3₃, 3₄, 3₅, 3₆, 3₇, 3₈) transmitting a message to signal a presence (1), wherein one node (3₁, 3₂, 3₃, 3₄, 3₅, 3₆, 3₇, 3₈) of in each case two nodes (3₁, 3₂, 3₃, 3₄, 3₅, 3₆, 3₇, 3₈) within transmission range of one another, with whose local time the local time of the other node (3₁, 3₂, 3₃, 3₄, 3₅, 3₆, 3₇, 3₈) is synchronised is specified, wherein the specification of the node (3₁, 3₂, 3₃, 3₄, 3₅, 3₆, 3₇, 3₈) is effected with reference to information of the acknowledgement message (2) received by one of the two nodes (3₁, 3₂, 3₃, 3₄, 3₅, 3₆, 3₇, 3₈) within transmission range of one another,
**characterised in that**
the system specifies that node (3₁, 3₂, 3₃, 3₄, 3₅, 3₆, 3₇, 3₈) of the two nodes (3₁, 3₂, 3₃, 3₄, 3₅, 3₆, 3₇, 3₈) within transmission range of one another whose local time has the highest time accuracy or which is linked into another ad hoc network with a node (3₁, 3₂, 3₃, 3₄, 3₅, 3₆, 3₇, 3₈) whose local time has the highest time accuracy.

## Revendications

1. Procédé de synchronisation temporelle dans un réseau *ad hoc* mobile avec les étapes de procédé suivantes :
• envoi d'un message pour signaler une présence (1) à travers chaque noeud (3₁, 3₂, 3₃, 3₄, 3₅, 3₆, 3₇, 3₈) du réseau *ad hoc* mobile dans respectivement une trame temporelle déterminée,
• validation du message reçu pour signaler une présence (1) à travers chaque noeud (3₁, 3₂, 3₃, 3₄, 3₅, 3₆, 3₇, 3₈) situé dans la portée de transmission du noeud (3₁, 3₂, 3₃, 3₄, 3₅, 3₆, 3₇, 3₈) envoyé avec respectivement un message de validation (2),
• établissement du noeud (3₁, 3₂, 3₃, 3₄, 3₅, 3₆, 3₇, 3₈) parmi deux noeuds (3₁, 3₂, 3₃, 3₄, 3₅, 3₆, 3₇, 3₈) situés dans une portée de transmission l'un par rapport à l'autre, avec le temps local duquel l'autre noeud (3₁, 3₂, 3₃, 3₄, 3₅, 3₆, 3₇, 3₈) respectif synchronise son temps local, en se fondant sur des informations d'un message de validation (2) que l'un des deux noeuds (3₁, 3₂, 3₃, 3₄, 3₅, 3₆, 3₇, 3₈) reçoit, et
• synchronisation du temps local des noeuds (3₁, 3₂, 3₃, 3₄, 3₅, 3₆, 3₇, 3₈) avec le temps local du noeud respectivement établi (3₁, 3₂, 3₃, 3₄, 3₅, 3₆, 3₇, 3₈),
**caractérisé en ce que**
le noeud (3₁, 3₂, 3₃, 3₄, 3₅, 3₆, 3₇, 3₈) des deux noeuds (3₁, 3₂, 3₃, 3₄, 3₅, 3₆, 3₇, 3₈) situés dans une portée de transmission l'un par rapport à l'autre qui est établi est celui dont le temps local présente la précision temporelle la plus élevée ou celui qui, dans un autre réseau *ad hoc,* est associé à un noeud (3₁, 3₂, 3₃, 3₄, 3₅, 3₆, 3₇, 3₈) dont le temps local présente la précision temporelle la plus élevée.

2. Procédé selon la revendication 1,
**caractérisé en ce que**
dans le cas d'un réseau *ad hoc* se formant uniquement de deux noeuds (3₁, 3₂) dont les temps locaux présentent une précision temporelle identique, le noeud (3₁, 3₂) qui est établi est celui qui envoie en premier un message de validation (2) suite à un message pour signaler une présence (1) des deux noeuds (3₁, 3₂).

3. Procédé selon l'un quelconque des revendications 1 à 2,
**caractérisé en ce que**
dans le cas d'une précision temporelle identique de tous les noeuds (3₁, 3₂, 3₃, 3₄, 3₅, 3₆, 3₇, 3₈) associés dans le réseau *ad hoc* mobile à former, le noeud des deux noeuds (3₁, 3₂, 3₃, 3₄, 3₅, 3₆, 3₇, 3₈) situés dans une portée de transmission l'un par rapport à l'autre qui est établi est celui qui forme un réseau *ad hoc* avec un nombre plus grand de noeuds (3₁, 3₂, 3₃, 3₄, 3₅, 3₆, 3₇, 3₈).

4. Procédé selon l'un quelconque des revendications 1 à 3,
**caractérisé en ce que**
dans le cas d'une précision temporelle identique de tous les noeuds (3₁, 3₂, 3₃, 3₄, 3₅, 3₆, 3₇, 3₈) associés dans le réseau *ad hoc* mobile à former et d'un nombre identique de noeuds (3₁, 3₂, 3₃, 3₄, 3₅, 3₆, 3₇, 3₈) avec lesquels les deux noeuds situés dans une portée de transmission l'un par rapport à l'autre forment respectivement un réseau *ad hoc,* le noeud (3₁, 3₂, 3₃, 3₄, 3₅, 3₆, 3₇, 3₈) qui est établi est celui dont le réseau *ad hoc* présente un identificateur d'identité inférieur.

5. Procédé selon la revendication 4,
**caractérisé en ce que**
l'identificateur d'identité du réseau *ad hoc* est l'adresse de contrôle d'accès au support du réseau *ad hoc.*

6. Procédé selon l'une quelconque des revendications 1 à 5,
**caractérisé en ce que**
dans le cas d'un réseau *ad hoc* dont au moins un noeud (3₁) s'éloigne, le noeud (3₂, 3₃, 3₄) du réseau *ad hoc* restant qui est établi est celui dont le temps local est celui avec lequel les noeuds (3₂, 3₃, 3₄) restants du réseau *ad hoc* synchronisent respectivement leur temps local, qui présente le temps local avec la précision temporelle la plus élevée.

7. Procédé de synchronisation temporelle selon la revendication 6,
**caractérisé en ce que**
dans le cas d'un réseau *ad hoc* dont au moins un noeud (3₁) s'éloigne et d'une précision temporelle identique des temps locaux des noeuds (3₂, 3₃, 3₄) du réseau *ad hoc* restant, le noeud (3₂, 3₃, 3₄) du réseau *ad hoc* restant qui est établi est celui qui présente le nombre le plus élevé de noeuds (3₂, 3₃, 3₄) directement voisins.

8. Procédé selon la revendication 6 ou 7,
**caractérisé en ce que**
dans le cas d'un réseau *ad hoc* dont au moins un noeud (3₁) s'éloigne, et d'une précision temporelle identique des temps locaux des noeuds (3₂, 3₃, 3₄) du réseau *ad hoc* restant, et d'un nombre identique de noeuds (3₂, 3₃, 3₄) respectivement directement voisins, pour chaque noeud (3₂, 3₃, 3₄) du réseau *ad hoc* restant, le noeud (3₂, 3₃, 3₄) du réseau *ad hoc* restant qui est établi est celui qui présente le plus petit identificateur d'identité.

9. Procédé selon l'une quelconque des revendications 1 à 5,
**caractérisé en ce que**
un noeud (3₁, 3₂, 3₃, 3₄, 3₅, 3₆, 3₇, 3₈) d'un réseau *ad hoc* dont un noeud (3₁, 3₂, 3₃, 3₄, 3₅, 3₆, 3₇, 3₈) s'éloigne, avec le temps local duquel le noeud (3₁, 3₂, 3₃, 3₄, 3₅, 3₆, 3₇, 3₈) du réseau *ad hoc* synchronisait son temps local jusqu'à présent, établit un autre noeud (3₁, 3₂, 3₃, 3₄, 3₅, 3₆, 3₇, 3₈) du réseau *ad hoc* restant situé dans sa portée de transmission, avec le temps local duquel il synchronise son temps local.

10. Procédé selon l'une quelconque des revendications 1 à 9,
**caractérisé en ce que**
la synchronisation du temps local des noeuds (3₁, 3₂, 3₃, 3₄, 3₅, 3₆, 3₇, 3₈), qui forment respectivement un réseau *ad hoc* avec l'un des deux noeuds (3₁, 3₂, 3₃, 3₄, 3₅, 3₆, 3₇, 3₈) situés dans une portée de transmission l'un par rapport à l'autre, avec le temps local du noeud (3₁, 3₂, 3₃, 3₄, 3₅, 3₆, 3₇, 3₈) établi est réalisée du fait que chaque noeud (3₁, 3₂, 3₃, 3₄, 3₅, 3₆, 3₇, 3₈) du réseau *ad hoc* respectif établit un noeud (3₁, 3₂, 3₃, 3₄, 3₅, 3₆, 3₇, 3₈) directement voisin du réseau *ad hoc* en tant que noeud (3₁, 3₂, 3₃, 3₄, 3₅, 3₆, 3₇, 3₈), avec le temps local duquel il synchronise son temps local.

11. Procédé selon l'une quelconque des revendications 1 à 10,
**caractérisé en ce que**
la synchronisation du temps local d'un noeud (3₁, 3₂, 3₃, 3₄, 3₅, 3₆, 3₇, 3₈) avec le temps local du noeud (3₁, 3₂, 3₃, 3₄, 3₅, 3₆, 3₇, 3₈) établi se produit du fait que le noeud (3₁, 3₂, 3₃, 3₄, 3₅, 3₆, 3₇, 3₈) établi notifie le noeud de l'instant de réception du message envoyé par le noeud (3₁, 3₂, 3₃, 3₄, 3₅, 3₆, 3₇, 3₈) pour actualiser une présence (1) ou du message de validation (2) dans le temps local du noeud (3₁, 3₂, 3₃, 3₄, 3₅, 3₆, 3₇, 3₈) établi et de l'instant d'envoi d'un message envoyé aux noeuds (3₁, 3₂, 3₃, 3₄, 3₅, 3₆, 3₇, 3₈) pour signaler une présence (1) ou d'un message de validation (2).

12. Procédé selon la revendication 11,
**caractérisé en ce que**
la synchronisation du temps local d'un noeud (3₁, 3₂, 3₃, 3₄, 3₅, 3₆, 3₇, 3₈) avec le temps local du noeud (3₁, 3₂, 3₃, 3₄, 3₅, 3₆, 3₇, 3₈) établi se produit à chaque réception d'un message pour signaler une présence (1) ou d'un message de validation (2) du noeud (3₁, 3₂, 3₃, 3₄, 3₅, 3₆, 3₇, 3₈) établi.

13. Procédé selon l'une quelconque des revendications 6 à 8,
**caractérisé en ce que**
l'éloignement d'un noeud (3₁, 3₂, 3₃, 3₄, 3₅, 3₆, 3₇, 3₈) hors d'un réseau *ad hoc* est identifié si, depuis le dernier instant de réception d'un message pour signaler une présence (1) du noeud (3₁, 3₂, 3₃, 3₄, 3₅, 3₆, 3₇, 3₈) qui s'éloigne à l'intérieur d'une trame temporelle constante où respectivement un message pour signaler une présence (1) est transmis, aucun message supplémentaire n'est reçu pour signaler une présence (1) du noeud (3₁, 3₂, 3₃, 3₄, 3₅, 3₆, 3₇, 3₈) qui s'éloigne de tous les noeuds (3₁, 3₂, 3₃, 3₄, 3₅, 3₆, 3₇, 3₈) restants du réseau *ad hoc* qui demeure.

14. Procédé selon l'une quelconque des revendications 1 à 13,
**caractérisé en ce que**
pour réduire l'influence d'une dérive d'horloge sur la précision temporelle du temps local d'un noeud (3₁, 3₂, 3₃, 3₄, 3₅, 3₆, 3₇, 3₈) une trame temporelle constante, dans laquelle le noeud (3₁, 3₂, 3₃, 3₄, 3₅, 3₆, 3₇, 3₈) envoie un message pour actualiser une présence (1), est rétrécie.

15. Procédé selon la revendication 14,
**caractérisé en ce que**
le noeud (3₁, 3₂, 3₃, 3₄, 3₅, 3₆, 3₇, 3₈) calcule au préalable l'instant d'envoi du message pour actualiser une présence (1), afin de limiter l'influence de la dérive d'horloge sur la précision temporelle du temps local du noeud (3₁, 3₂, 3₃, 3₄, 3₅, 3₆, 3₇, 3₈).

16. Système de synchronisation temporelle dans un réseau *ad hoc* mobile comprenant plusieurs noeuds (3₁, 3₂, 3₃, 3₄, 3₅, 3₆, 3₇, 3₈) envoyant respectivement un message pour signaler une présence (1) dans respectivement une trame temporelle déterminée, dans lequel se produit, à travers chaque noeud (3₁, 3₂, 3₃, 3₄, 3₅, 3₆, 3₇, 3₈) situé dans une portée de transmission du noeud (3₁, 3₂, 3₃, 3₄, 3₅, 3₆, 3₇, 3₈) envoyant un message pour signaler une présence (1), une validation du message pour signaler une présence (1) au moyen d'un message de validation (2), dans lequel un noeud (3₁, 3₂, 3₃, 3₄, 3₅, 3₆, 3₇, 3₈) est établi de respectivement deux noeuds (3₁, 3₂, 3₃, 3₄, 3₅, 3₆, 3₇, 3₈) situés dans une portée de transmission l'un par rapport à l'autre, avec le temps local duquel est synchronisé le temps local de l'autre noeud (3₁, 3₂, 3₃, 3₄, 3₅, 3₆, 3₇, 3₈) respectif, dans lequel l'établissement du noeud (3₁, 3₂, 3₃, 3₄, 3₅, 3₆, 3₇, 3₈) se produit en se fondant sur des informations d'un message de validation (2) reçu par l'un des deux noeuds (3₁, 3₂, 3₃, 3₄, 3₅, 3₆, 3₇, 3₈) situés dans une portée de transmission l'un par rapport à l'autre,
**caractérisé en ce que**
le système établit le noeud (3₁, 3₂, 3₃, 3₄, 3₅, 3₆, 3₇, 3₈) des deux noeuds (3₁, 3₂, 3₃, 3₄, 3₅, 3₆, 3₇, 3₈) situés dans une portée de transmission l'un par rapport à l'autre, dont le temps local présente la précision temporelle la plus élevée ou qui, dans un autre réseau *ad hoc,* est associé à un noeud (3₁, 3₂, 3₃, 3₄, 3₅, 3₆, 3₇, 3₈) dont le temps local présente la précision temporelle la plus élevée.
